# EUROPEAN PATENT APPLICATION

(11) **EP 4 525 490 A1**
(43) Date of publication of application: **19.03.2025**
(21) Application number: 23814900.9
(22) Date of filing: 08.05.2023
(51) Int. Cl.: H04W 4/50

(54) **COMMUNICATION METHOD, APPARATUS, AND SYSTEM**

(30) Priority: 31.05.2022 CN 202210612736
(71) Applicant: Huawei Technologies Co., Ltd., Shenzhen, Guangdong 518129 (CN)
(72) Inventor: ZHAO, Mingyu, Shenzhen, Guangdong 518129 (CN); YAN, Xueqiang, Shenzhen, Guangdong 518129 (CN); XI, Yan, Shenzhen, Guangdong 518129 (CN); WU, Jianjun, Shenzhen, Guangdong 518129 (CN)
(74) Representative: Goddar, Heinz J.
(86) International application number: PCT/CN2023/092838
(87) International publication number: WO 2023/231714

(57) **Abstract**

This application provides a communication method, apparatus, and system, to implement a data service. The method includes: A data orchestration network element receives a first service request message, determines, based on requirement information and one or more pieces of data service capability information, at least one data agent network element and operation configuration information corresponding to each of the at least one data agent network element, and sends the operation configuration information. The requirement information is a service requirement that is on first data and that is determined based on a service requested by using the first service request message, the one or more pieces of data service capability information are in one-to-one correspondence with one or more data agent network elements, the at least one data agent network element is at least one of the one or more data agent network elements, the requirement information corresponds to at least one of the one or more pieces of data service capability information, and the operation configuration information of any one of the at least one data agent network element indicates an operation performed by the any one data agent network element on the first data.

## Description

This application claims priority to Chinese Patent Application No. 202210612736.9, filed with the China National Intellectual Property Administration on May 31, 2022 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

In a data service (data service, DS), acquisition, pre-processing, analytics, and other operations may be performed on data, and the obtained data is provided as a service product. With development of a scale of a mobile communication network, a new technology, and the like, data in the mobile communication network is increasing, and a requirement for the data service is also increasing.

Therefore, the data in the mobile communication network may be processed based on a data service architecture, to implement the data service. However, a specific implementation remains to be studied.

### SUMMARY

Embodiments of this application provide a communication method, apparatus, and system, to process data in a mobile communication network based on a data service architecture, to implement a data service.

To achieve the foregoing objective, the following technical solutions are used in this application.

According to a first aspect, a communication method is provided. The communication method includes: A data orchestration network element receives a first service request message, determines, based on requirement information and one or more pieces of data service capability information, at least one data agent network element and operation configuration information corresponding to each of the at least one data agent network element, and sends the operation configuration information. The requirement information is a service requirement that is on first data and that is determined based on a service requested by using the first service request message, the one or more pieces of data service capability information are in one-to-one correspondence with one or more data agent network elements, the at least one data agent network element is at least one of the one or more data agent network elements, the requirement information corresponds to at least one of the one or more pieces of data service capability information, and the operation configuration information of any one of the at least one data agent network element indicates an operation performed by the any one data agent network element on the first data.

Based on the communication method provided in the first aspect, the data orchestration network element receives the first service request message, determines, from the one or more data agent network elements based on the requirement information and the one or more pieces of data service capability information, data agent network elements participating in a current data service, and obtains the operation configuration information corresponding to each data agent network element participating in the current data service. The operation configuration information indicates the operation performed by the data agent network element on the first data, and the requirement information is the service requirement that is on the first data and that is determined based on the service requested by using the first service request message. The data orchestration network element sends the operation configuration information to the corresponding data agent network element, and the data agent network element performs the operation indicated by the operation configuration information. In this way, the data service can be implemented.

In a possible design manner, the first service request message may be for requesting an application service or a service service. Optionally, the application service may be a service requested by an application or an application server, and the service service may be a service requested by a network service network element. In different scenarios, services requested by using the first service request message may be different.

In a possible design manner, the first service request message is from a service request network element, and the communication method provided in the first aspect may further include: The data orchestration network element receives a first verification response message from a trust anchor. The first verification response message may indicate that the service request network element has permission to access the first data. In other words, whether the service request network element has the permission to access the first data may be obtained by the data orchestration network element from the trust anchor. This can implement a trusted data service.

In a possible design manner, the communication method provided in the first aspect may further include: The data orchestration network element sends a first verification request message to the trust anchor. The first verification request message may be for requesting to verify whether the service request network element has the permission to access the first data. In this way, the trusted data service can be implemented.

In a possible design manner, the first service request message is from the service request network element, and the communication method provided in the first aspect may further include: The data orchestration network element sends first communication information. The first communication information may indicate information about a data agent network element that is in the at least one data agent network element and that directly communicates with the service request network element. For example, the data orchestration network element may select, from the determined data agent network element participating in the current data service, a data agent network element that directly communicates with the service request network element, and the service request network element may establish direct interaction with the data agent network element.

In a possible design manner, the communication method provided in the first aspect may further include: The data orchestration network element receives the data service capability information corresponding to the one or more data agent network elements.

In a possible design manner, data service capability information of any one of the one or more data agent network elements may include one or more of the following: an identifier of the any one data agent network element, location information of the any one data agent network element, a data acquisition capability, a data pre-processing capability, a data storage capability, a data reporting capability, a data analytics capability, a capability of interacting with the service request network element, a data protection capability, and a data compression capability. It needs to be noted that data service capabilities of the data agent network element are not limited thereto.

In a possible design manner, the operation indicated by the operation configuration information may include one or more of the following: data acquisition, data pre-processing, data protection, data storage, data analytics, and the interaction with the service request network element. In this way, the data agent network element may perform the operation indicated by the operation configuration information.

It needs to be noted that the operation indicated by the operation configuration information in this application is different from common encoding/decoding, a modulation/demodulation operation, and rate matching.

In a possible design manner, the requirement information may include one or more of the following service requirements: a geographical location, the data acquisition, the data pre-processing, the data storage, data reporting, the data analytics, the interaction with the service request network element, the data protection, and data compression.

In a possible design manner, the requirement information may correspond to a data service task identifier. For example, the data service task identifier may identify a data service task corresponding to the first service request message.

In a possible design manner, the communication method provided in the first aspect may further include: The data orchestration network element sends updated information about a data security and privacy protection technology repository and/or updated information about an analytics tool repository to one or more of the at least one data agent network element. In other words, if the data security and privacy protection technology repository, the analytics tool repository, and the like are updated, the data orchestration network element may push either updated information or the data security and privacy protection technology repository, the analytics tool repository, and the like to the data agent network element. In this way, data security protection, data privacy protection, or the like can be implemented.

In a possible design manner, the data orchestration network element may be deployed in the network service network element. In this way, a function of the data orchestration network element may be performed by the network service network element.

In a possible design manner, the first data may include: data acquired from a mobile communication network or synthesized data.

Optionally, the first data may include but is not limited to one or more of the following: data on a terminal device side, data of each function node on an access network device side, data of each function node on a transfer network side, data of each function node on a core network side, data of each function node of operations, administration, and maintenance (operations, administration and maintenance, OAM), and synthesized data.

Optionally, the synthesized data may be artificially synthesized data.

According to a second aspect, a communication method is provided. The communication method includes: A first data agent network element receives operation configuration information, and the first data agent network element processes first data based on an operation indicated by the operation configuration information, to obtain first information. When the operation configuration information indicates that the first data agent network element communicates with a second data agent network element, the first data agent network element sends the first information to the second data agent network element. Alternatively, when the operation configuration information indicates that the first data agent network element communicates with a service request network element, the first data agent network element sends the first information to the service request network element. The operation configuration information indicates the operation performed by the first data agent network element on the first data.

In a possible design manner, the operation indicated by the operation configuration information may include one or more of the following: data acquisition, data pre-processing, data protection, data storage, data analytics, and interaction with the service request network element.

In a possible design manner, that the first data agent network element processes first data based on an operation indicated by the operation configuration information, to obtain first information may include: The first data agent network element sends a data request message to a third data agent network element based on the operation configuration information, and the first data agent network element receives a data response message from the third data agent network element. The data request message may be for requesting one or more of the following data: network data, user data, internet of things data, and artificial intelligence model data. The data response message includes the one or more of the data included in the data request message.

In a possible design manner, the data request message may further include security information, and the security information may be used to verify whether the first data agent network element has permission to access the first data.

In a possible design manner, that the first data agent network element processes first data based on an operation indicated by the operation configuration information, to obtain first information may include: The first data agent network element processes second information based on the operation indicated by the operation configuration information, to obtain the first information. The second information is received by the first data agent network element, and the second information is obtained based on the first data.

In a possible design manner, the communication method provided in the second aspect may further include: The first data agent network element receives a second verification response message from a trust anchor. The second verification response message may indicate that the second data agent network element has permission to access the first data of the first data agent network element.

In a possible design manner, the communication method provided in the second aspect may further include: The first data agent network element sends a second verification request message to the trust anchor. The second verification request message may be for requesting to verify whether the second data agent network element has the permission to access the first data of the first data agent network element.

In a possible design manner, the communication method provided in the second aspect may further include: The first data agent network element sends data service capability information to a data orchestration network element.

In a possible design manner, the data service capability information may include one or more of the following: an identifier of the first data agent network element, location information of the first data agent network element, a data acquisition capability, a data pre-processing capability, a data storage capability, a data reporting capability, a data analytics capability, a capability of interacting with the service request network element, a data protection capability, and a data compression capability.

In a possible design manner, the communication method provided in the second aspect may further include: The first data agent network element receives updated information about a data security and privacy protection technology repository and/or updated information about an analytics tool repository from the data orchestration network element.

In a possible design manner, the first data may include: data acquired from a mobile communication network or synthesized data.

In addition, for technical effects of the communication method according to the second aspect, refer to technical effects of the communication method according to any possible implementation of the first aspect. Details are not described herein again.

According to a third aspect, a communication method is provided. The communication method includes: A service request network element sends a first service request message to a data orchestration network element, and the service request network element receives first information from a data agent network element. The first information is obtained based on first data.

In a possible design manner, the first service request message may be for requesting an application service or a service service.

In a possible design manner, the communication method provided in the third aspect may further include: The service request network element receives first communication information. The first communication information may indicate information about a data agent network element that directly communicates with the service request network element.

In a possible design manner, the communication method provided in the third aspect may further include: The service request network element processes the first information, to obtain the application service or the service service.

In a possible design manner, that the service request network element processes the first information, to obtain the application service or the service service may include: The service request network element obtains abnormal behavior information of an internet of things terminal device by using the first information.

In a possible design manner, that the service request network element processes the first information, to obtain the application service or the service service may include: The service request network element predicts quality of service by using the first information and artificial intelligence model parameter configuration information. The artificial intelligence model parameter configuration information is used to predict the quality of service.

In a possible design manner, the communication method provided in the third aspect may further include: The service request network element requests the artificial intelligence model parameter configuration information from the data agent network element.

In a possible design manner, the first data may include: data acquired from a mobile communication network or synthesized data.

In addition, for technical effects of the communication method according to the third aspect, refer to technical effects of the communication method according to any possible implementation of the first aspect. Details are not described herein again.

According to a fourth aspect, a communication apparatus is provided. The communication apparatus includes: a transceiver module and a processing module. The transceiver module is configured to receive a first service request message. The processing module is configured to determine, based on requirement information and one or more pieces of data service capability information, at least one data agent network element and operation configuration information corresponding to each of the at least one data agent network element. The transceiver module is further configured to send the operation configuration information. The requirement information is a service requirement that is on first data and that is determined based on a service requested by using the first service request message, the one or more pieces of data service capability information are in one-to-one correspondence with one or more data agent network elements, the at least one data agent network element is at least one of the one or more data agent network elements, the requirement information corresponds to at least one of the one or more pieces of data service capability information, and the operation configuration information of any one of the at least one data agent network element indicates an operation performed by the any one data agent network element on the first data.

In a possible design manner, the first service request message may be for requesting an application service or a service service.

In a possible design manner, the first service request message is from a service request network element, and the transceiver module is further configured to receive a first verification response message from a trust anchor. The first verification response message may indicate that the service request network element has permission to access the first data.

In a possible design manner, the transceiver module is further configured to send a first verification request message to the trust anchor. The first verification request message may be for requesting to verify whether the service request network element has the permission to access the first data.

In a possible design manner, the first service request message is from the service request network element, and the transceiver module is further configured to send first communication information. The first communication information may indicate information about a data agent network element that is in the at least one data agent network element and that directly communicates with the service request network element.

In a possible design manner, the transceiver module is further configured to receive the data service capability information corresponding to the one or more data agent network elements.

In a possible design manner, data service capability information of any one of the one or more data agent network elements may include one or more of the following: an identifier of the any one data agent network element, location information of the any one data agent network element, a data acquisition capability, a data pre-processing capability, a data storage capability, a data reporting capability, a data analytics capability, a capability of interacting with the service request network element, a data protection capability, and a data compression capability.

In a possible design manner, the operation indicated by the operation configuration information may include one or more of the following: data acquisition, data pre-processing, data protection, data storage, data analytics, and the interaction with the service request network element.

In a possible design manner, the requirement information may include one or more of the following service requirements: a geographical location, the data acquisition, the data pre-processing, the data storage, data reporting, the data analytics, the interaction with the service request network element, the data protection, and data compression.

In a possible design manner, the requirement information may correspond to a data service task identifier.

In a possible design manner, the transceiver module is further configured to send updated information about a data security and privacy protection technology repository and/or updated information about an analytics tool repository to one or more of the at least one data agent network element.

In a possible design manner, the communication apparatus according to the fourth aspect may be deployed in a network service network element.

In a possible design manner, the first data may include: data acquired from a mobile communication network or synthesized data.

It needs to be noted that the transceiver module according to the fourth aspect may include: a receiving module and a sending module. A specific implementation of the transceiver module is not specifically limited in this application.

Optionally, the communication apparatus according to the fourth aspect may further include a storage module. The storage module stores a program or instructions. When the processing module executes the program or the instructions, the communication apparatus according to the fourth aspect is enabled to perform the method according to the first aspect.

It needs to be noted that the communication apparatus according to the fourth aspect may be a data orchestration network element, or may be a chip (system) or another component or assembly that may be disposed in the data orchestration network element. This is not limited in this application.

In addition, for technical effects of the communication apparatus according to the fourth aspect, refer to technical effects of the communication method according to any possible implementation of the first aspect. Details are not described herein again.

According to a fifth aspect, a communication apparatus is provided. The communication apparatus includes: a transceiver module and a processing module. The transceiver module is configured to receive operation configuration information. The processing module is configured to process first data based on an operation indicated by the operation configuration information, to obtain first information. The transceiver module is further configured to: when the operation configuration information indicates that the communication apparatus communicates with a second data agent network element, send the first information to the second data agent network element. Alternatively, the transceiver module is further configured to: when the operation configuration information indicates that the communication apparatus communicates with a service request network element, send the first information to the service request network element. The operation configuration information indicates the operation performed by the communication apparatus on the first data.

In a possible design manner, the operation indicated by the operation configuration information may include one or more of the following: data acquisition, data pre-processing, data protection, data storage, data analytics, and interaction with the service request network element.

In a possible design manner, the transceiver module is further configured to send a data request message to a third data agent network element based on the operation configuration information. The transceiver module is further configured to receive a data response message from the third data agent network element. The data request message may be for requesting one or more of the following data: network data, user data, internet of things data, and artificial intelligence model data. The data response message includes the one or more of the data included in the data request message.

In a possible design manner, the data request message may further include security information, and the security information may be used to verify whether the communication apparatus has permission to access the first data.

In a possible design manner, the processing module is further configured to process second information based on the operation indicated by the operation configuration information, to obtain the first information. The second information is received by the communication apparatus, and the second information is obtained based on the first data.

In a possible design manner, the transceiver module is further configured to receive a second verification response message from a trust anchor. A first verification response message may indicate that the second data agent network element has permission to access the first data of the first data agent network element.

In a possible design manner, the transceiver module is further configured to send a second verification request message to the trust anchor. The second verification request message may be for requesting to verify whether the second data agent network element has the permission to access the first data of the communication apparatus.

In a possible design manner, the transceiver module is further configured to send data service capability information to a data orchestration network element.

In a possible design manner, the data service capability information may include one or more of the following: an identifier of the communication apparatus, location information of the communication apparatus, a data acquisition capability, a data pre-processing capability, a data storage capability, a data reporting capability, a data analytics capability, a capability of interacting with the service request network element, a data protection capability, and a data compression capability.

In a possible design manner, the transceiver module is further configured to receive updated information about a data security and privacy protection technology repository and/or updated information about an analytics tool repository from the data orchestration network element.

In a possible design manner, the first data may include: data acquired from a mobile communication network or synthesized data.

It needs to be noted that the transceiver module according to the fifth aspect may include: a receiving module and a sending module. A specific implementation of the transceiver module is not specifically limited in this application.

Optionally, the communication apparatus according to the fifth aspect may further include a storage module. The storage module stores a program or instructions. When the processing module executes the program or the instructions, the communication apparatus according to the fifth aspect is enabled to perform the method according to the second aspect.

It needs to be noted that the communication apparatus according to the fifth aspect may be the first data agent network element, or may be a chip (system) or another component or assembly that may be disposed in the first data agent network element. This is not limited in this application.

In addition, for technical effects of the communication apparatus according to the fifth aspect, refer to technical effects of the communication method according to any possible implementation of the second aspect. Details are not described herein again.

According to a sixth aspect, a communication apparatus is provided. The communication apparatus includes: a sending module and a receiving module. The sending module is configured to send a first service request message to a data orchestration network element. The receiving module is configured to receive first information from a data agent network element. The first information is obtained based on first data.

In a possible design manner, the first service request message may be for requesting an application service or a service service.

In a possible design manner, the receiving module is further configured to receive first communication information. The first communication information may indicate information about a data agent network element that directly communicates with a service request network element.

In a possible design manner, a processing module is configured to process the first information, to obtain the application service or the service service.

In a possible design manner, the processing module is further configured to obtain abnormal behavior information of an internet of things terminal device by using the first information.

In a possible design manner, the processing module is further configured to predict quality of service by using the first information and artificial intelligence model parameter configuration information. The artificial intelligence model parameter configuration information is used to predict the quality of service.

In a possible design manner, the receiving module is further configured to request the artificial intelligence model parameter configuration information from the data agent network element.

In a possible design manner, the first data may include: data acquired from a mobile communication network or synthesized data.

It needs to be noted that the receiving module and the sending module may be separately disposed, or may be integrated into one module, namely, a transceiver module. A specific implementation of the receiving module and the sending module is not specifically limited in this application.

Optionally, the communication apparatus according to the sixth aspect may further include a storage module. The storage module stores a program or instructions. When the processing module executes the program or the instructions, the communication apparatus according to the sixth aspect is enabled to perform the method according to the third aspect.

It needs to be noted that the communication apparatus according to the sixth aspect may be the service request network element, or may be a chip (system) or another component or assembly that may be disposed in the service request network element. This is not limited in this application.

In addition, for technical effects of the communication apparatus according to the sixth aspect, refer to technical effects of the communication method according to any possible implementation of the third aspect. Details are not described herein again.

According to a seventh aspect, a communication apparatus is provided. The communication apparatus includes a processor. The processor is coupled to a memory, and the memory is configured to store a computer program.

The processor is configured to execute the computer program stored in the memory, to perform the method according to any possible implementation of the first aspect to the third aspect.

In a possible design, the communication apparatus according to the seventh aspect may further include a transceiver. The transceiver may be a transceiver circuit or an input/output port. The transceiver may be used by the communication apparatus to communicate with another device.

It needs to be noted that the input port may be configured to implement a receiving function in the first aspect to the third aspect, and the output port may be configured to implement a sending function in the first aspect to the third aspect.

In this application, the communication apparatus according to the seventh aspect may be a data orchestration network element, a first data agent network element, or a service request network element, or a chip or a chip system disposed inside the data orchestration network element, the first data agent network element, or the service request network element.

In addition, for technical effects of the communication apparatus according to the seventh aspect, refer to technical effects of the method according to any implementation of the first aspect. Details are not described herein again.

According to an eighth aspect, a communication system is provided. The communication system includes a data orchestration network element and a first data agent network element, and may further include a service request network element. The data orchestration network element is configured to implement the method according to the first aspect. The first data agent network element is configured to implement the method according to the second aspect. The service request network element is configured to implement the method according to the third aspect.

Alternatively, the communication system includes: the communication apparatus according to the fourth aspect and configured to implement the method according to the first aspect, and the communication apparatus according to the fifth aspect and configured to implement the method according to the second aspect, and may further include the communication apparatus according to the sixth aspect and configured to implement the method according to the third aspect.

According to a ninth aspect, a chip system is provided. The chip system includes a logic circuit and an input/output port. The logic circuit is configured to implement a processing function in the first aspect to the third aspect, and the input/output port is configured to implement receiving and sending functions in the first aspect to the third aspect. Specifically, the input port may be configured to implement the receiving function in the first aspect to the third aspect, and the output port may be configured to implement the sending function in the first aspect to the third aspect.

In a possible design, the chip system further includes a memory. The memory is configured to store program instructions and data for implementing the functions in the first aspect to the third aspect.

The chip system may include a chip, or may include the chip and another discrete device.

According to a tenth aspect, a computer-readable storage medium is provided. The computer-readable storage medium stores a computer program or instructions. When the computer program or the instructions are run on a computer, the method according to any possible implementation of the first aspect to the third aspect is performed.

According to an eleventh aspect, a computer program product is provided, including a computer program or instructions. When the computer program or the instructions are run on a computer, the method according to any possible implementation of the first aspect to the third aspect is performed.

### BRIEF DESCRIPTION OF DRAWINGS

FIG. 1 is a diagram of an architecture of a communication system according to an embodiment of this application;
FIG. 2 is a diagram of a data service architecture according to an embodiment of this application;
FIG. 3 is a diagram of a function of a data service architecture according to an embodiment of this application;
FIG. 4 is a schematic of a logical network topology according to an embodiment of this application;
FIG. 5 is a diagram of an operation chain according to an embodiment of this application;
FIG. 6a to FIG. 6d are diagrams of some network architectures according to embodiments of this application;
FIG. 7 is a diagram of a structure of a communication apparatus according to an embodiment of this application;
FIG. 8 is a schematic flowchart of a communication method according to an embodiment of this application;
FIG. 9 is a schematic flowchart of another communication method according to an embodiment of this application;
FIG. 10 is a diagram of a structure of another communication apparatus according to an embodiment of this application; and
FIG. 11 is a diagram of a structure of still another communication apparatus according to an embodiment of this application.

### DESCRIPTION OF EMBODIMENTS

The following describes technical solutions of this application with reference to the accompanying drawings.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle-to-everything (vehicle-to-everything, V2X) communication system, a device-to-device (device-to-device, D2D) communication system, an internet of vehicles communication system, a 4th generation (4th generation, 4G) mobile communication system like a long term evolution (long term evolution, LTE) system or a worldwide interoperability for microwave access (worldwide interoperability for microwave access, WiMAX) communication system, a 5th generation (5th generation, 5G) mobile communication system like a new radio (new radio, NR) system, and a future communication system like a 6th generation (6th generation, 6G) mobile communication system.

All aspects, embodiments, or features are presented in this application by describing a system that may include a plurality of devices, assemblies, modules, or the like. It should be appreciated and understood that, each system may include another device, assembly, module, or the like, and/or may not include all devices, assemblies, modules, or the like discussed with reference to the accompanying drawings. In addition, a combination of these solutions may be further used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the term "example" is used to present a concept in a specific manner.

In embodiments of this application, sometimes "of (of)", "corresponding (corresponding, relevant)", and "corresponding (corresponding)" may be mixed. It should be noted that when differences are not emphasized, meanings expressed by the terms are the same.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

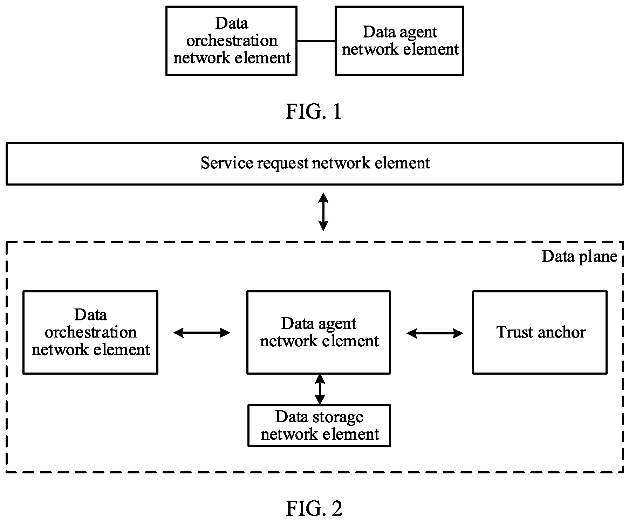

For ease of understanding embodiments of this application, a communication system shown in FIG. 1 is first used as an example to describe in detail a communication system applicable to an embodiment of this application. For example, FIG. 1 is a diagram of an architecture of a communication system to which a communication method is applicable according to an embodiment of this application.

As shown in FIG. 1, the communication system includes a data orchestration (data orchestration, DO) network element and a data agent (data agent, DA) network element. There may be one or more data orchestration network elements, and there may be one or more data agent network elements.

The data orchestration network element may obtain a service request, translate the service request into service requirements on data, determine data agent network elements for implementing the service requirements, and orchestrate functions of the data agent network elements, so that the data agent network elements perform corresponding operations and establish a dynamic logical network topology, to implement the corresponding service requirements.

For example, the data orchestration network element may be deployed in any core network element, transfer network (transfer network, TN) network element, or access network device, or another network element (for example, an operations, administration and maintenance (operations, administration and maintenance, OAM) network element), or the data orchestration network element may be independently deployed. For example, the data orchestration network elements may be hierarchically deployed on a core network side or an access network device side. The data orchestration network element may be deployed in a network service (network service, NS) network element. For another example, the data orchestration network element may be independently deployed in a network as a network function (network function, NF) or a network element. In actual deployment, one or more NFs may form a network element.

The data agent network element may implement one or more of the following functions: data acquisition, pre-processing, storage, analytics, data protection, and the like. Different data agent network elements may have a same data service capability or different data service capabilities, and may implement a same function or different functions. The data agent network element may interact with the data orchestration network element, to obtain a related operation that needs to be performed to meet a service requirement, and perform the operation. The data agent network elements may establish the logical network topology to form a dynamic data pipeline (data pipeline) (or referred to as a data flow, service logic, a function chain, an operation chain, or the like). The data pipeline includes the functions corresponding to the one or more data agent network elements based on the service requirements, and an output of a former function is an input of a latter function, to implement a corresponding data service.

The data agent network element may be deployed in any core network element, transfer network (transfer network, TN) network element, terminal device, or access network device, or another network element (for example, an operations, administration and maintenance (operations, administration and maintenance, OAM) network element), or the data agent network element may be independently deployed. For example, the data agent network element may be independently deployed in the network as a network function NF or a network element.

For example, the data agent network element may be evolved from any core network element, transfer network network element, terminal device, or access network device, or another network element. The data agent network element may implement a function that can be implemented by the any core network element, transfer network network element, terminal device, or access network device, or the another network element. Alternatively, the function of the data agent network element provided in this application may be implemented by the any core network element, transfer network network element, terminal device, or access network device, or the another network element.

For example, the data agent network element may be evolved from a network data analytics function (network data analytics function, NWDAF) network element, and can implement a function of the NWDAF network element, a scenario case implemented based on the NWDAF network element, and the like.

Optionally, the data agent network element may be optionally deployed in the any core network element, transfer network network element, terminal device, or access network device, or the another network element based on a resource and/or a capability of the network element, to implement cross-domain data acquisition. The data agent network element may acquire data from a whole domain, to implement cross-domain data management and collaboration.

For example, as the network function NF, the data agent network element can match cloud native SBI encryption, NF dynamic instantiation, and a K8S deployment encryption environment. In addition, impact on a performance loss and security of the NF can be minimized.

When there are the plurality of data agent network elements in the communication system, some data agent network elements may be disposed inside a network device (which refers to the any core network element, terminal device, access network device, or the another network element), and some data agent network elements are independently deployed; or the plurality of data agent network elements are all disposed inside a network device, or the plurality of data agent network elements are all independently deployed. This is not limited in this application.

It needs to be noted that the data orchestration network element may be a logical entity or a physical entity, and the data agent network element may be a logical entity or a physical entity. This is not limited in this application.

For example, the data agent network element may be deployed in a centralized manner or in a distributed manner. This distributed deployment manner may include a distributed hash table (distributed hash table, DHT) manner and the like.

The data agent network element is flexibly deployed in a distributed manner as required, which can meet diversified and flexible data service requirements and reduce data acquisition overheads.

The core network element is located on a network side of the communication system, and may be configured to provide a network service for the access network device, the terminal device, and the like. The core network element may include but is not limited to one or more of the following: a mobility management network element, a session management network element, a user plane network element, a policy control network element, a network exposure network element, an application network element, the NWDAF network element, and/or the OAM network element.

The mobility management network element is mainly used for mobility management, access management, and the like. In a 5G mobile communication system, the access management network element may be an access and mobility management function (access and mobility management function, AMF) network element, and mainly performs functions such as mobility management and access authentication/authorization. In addition, the mobility management network element may be further responsible for transferring a user policy between a terminal and a policy control function (policy control function, PCF) network element.

The session management network element is mainly used for session management (for example, creation or deletion), maintenance of a session context and user plane forwarding tunnel information, internet protocol (internet protocol, IP) address allocation and management for the terminal device, selection of a termination that can manage a user plane function interface and a policy control and charging function interface, a downlink data notification, and the like.

In the 5G communication system, the session management network element may be a session management function (session management function, SMF) network element, and completes terminal IP address allocation, UPF selection, charging, QoS policy control, and the like.

The user plane network element, as an interface with a data network, completes functions such as user plane data forwarding, session/flow-level-based charging statistics collection, and bandwidth limitation, to be specific, packet routing and forwarding, quality of service (quality of service, QoS) handling for user plane data, and the like. In the 5G communication system, the user plane network element may be a user plane function (user plane function, UPF) network element.

The policy control network element includes a user subscription data management function, a policy control function, a charging policy control function, quality of service (quality of service, QoS) control, and the like, is a unified policy framework used to guide network behavior, and provides policy rule information and the like for a control plane function network element (for example, an AMF or an SMF network element). In the 5G mobile communication system, the policy control network element may be a PCF.

The network exposure network element may be configured to: provide a framework, authentication, and an interface that are related to network capability exposure, and transfer information between a 5G system network function and another network function. In the 5G communication system, the network exposure network element may be a network exposure function (network exposure function, NEF) network element, is mainly configured to expose a service and a capability of a 3GPP network function to an AF, and may further enable the AF to provide information for the 3GPP network function.

The application network element may be configured to provide various services, can interact with a core network through a network exposure function (network exposure function, NEF) network element, and can interact with a policy management framework to perform policy management. In the 5G communication system, the application network element may be an application function (application function, AF) network element or a time sensitive network application function (time sensitive network application function, TSNAF) network element, represents an application function of a third party or an operator, is an interface for obtaining external application data in a 5G network, and is mainly configured to transfer a requirement of an application side on the network side.

The NWDAF network element may be configured to: acquire data from the core network and the OAM network element, and feed back a data analytics result to the NF, the AF, or the OAM. For example, the NWDAF network element may acquire OAM data from the OAM network element, and acquire non-OAM data from the NF in the core network or the AF. The non-OAM data may include non-OAM data acquired at levels of a terminal, a terminal group, and a service.

The OAM network element may acquire data from the access network device.

The access network device may also be referred to as an access device or a radio access network device. The access network device can manage a radio resource, provide an access service for the terminal device, and complete data forwarding between the terminal device and the core network. The access network device may also be understood as a base station in a network.

For example, the access network device in embodiments of this application may be any communication device that has a wireless transceiver function and that is configured to communicate with the terminal device. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseband unit, BBU), an access point (access point, AP) in a wireless fidelity (wireless fidelity, Wi-Fi) system, a wireless relay node, a wireless backhaul node, and a transmission point (transmission point, TP) or a transmission reception point (transmission reception point, TRP); or may be a gNB or a transmission point (TRP or TP) in a 5G system like an NR system, one or one group of antenna panels (including a plurality of antenna panels) of a base station in the 5G system; or may be a network node forming a gNB or a transmission point, like a baseband unit (BBU) or a distributed unit (distributed unit, DU); or may be a satellite and an uncrewed aerial vehicle.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical layer (physical layer, PHY). The AAU implements some physical layer processing functions, radio frequency processing, and a function related to an active antenna. Information at the RRC layer is generated by the CU, and is finally encapsulated at the PHY layer of the DU into information at the PHY layer, or is obtained through conversion from the information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

The terminal device is a terminal accessing the communication system and having a wireless transceiver function, or a chip or a chip system that may be disposed in the terminal. In this application, the terminal device may also be referred to as a terminal, user equipment (user equipment, UE), an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), an uncrewed aerial vehicle, a computer having a wireless transceiver function, customer premise equipment (customer premise equipment, CPE), a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device, vehicle-mounted device, or wearable device connected to a wireless modem, a terminal in the 5G network, a terminal in a future evolved network, or the like.

For another example, the terminal device in this application may be an express delivery terminal (for example, a device that can monitor a location of a cargo vehicle, or a device that can monitor a temperature and humidity of a cargo) in intelligent logistics, a wireless terminal (for example, a wearable device that can acquire related data of poultry and livestock) in intelligent agriculture, a wireless terminal (for example, a smart elevator, a fire monitoring device, or a smart meter) in intelligent architecture, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a self-service checkout machine, or an unmanned convenience store) in intelligent retail. For another example, the terminal device in this application may be a vehicle-mounted module, a vehicle-mounted assembly, a vehicle-mounted component, a vehicle-mounted chip, or a vehicle-mounted unit that is disposed inside a vehicle as one or more components or units. The vehicle may implement the methods provided in this application by using the vehicle-mounted module, the vehicle-mounted assembly, the vehicle-mounted component, the vehicle-mounted chip, or the vehicle-mounted unit that is disposed inside the vehicle. The terminal device in this application may be a smart internet of things (smart internet of things, SIoT) terminal device or a non-SIoT terminal device, and has specific computing, storage, and other capabilities. The non-SIoT terminal device may acquire data by using an internet of things gateway. For example, the non-SIoT terminal device may be a terminal with a limited computing capability, for example, a sensor with a single function. Optionally, the data agent network element may be disposed inside the SIoT terminal device, or the SIoT terminal device may implement a function of the data agent network element.

It should be understood that FIG. 1 is merely a simplified diagram of an example for ease of understanding. The communication system may further include other devices, for example, a trust anchor (trust anchor, TA), a service request network element, and/or a data storage network element (for a specific implementation, refer to the following corresponding descriptions in FIG. 2), which are not shown in FIG. 1.

For example, FIG. 2 is a diagram of a data service architecture according to an embodiment of this application. The communication system shown in FIG. 1 is applicable to the data service architecture shown in FIG. 2.

As shown in FIG. 2, this application proposes a case that the normalized data service architecture is constructed based on a data plane, to provide a data service for a service request network element. The data service architecture may include but is not limited to one or more of the following: a data orchestration network element, a data agent network element, a trust anchor (trust anchor, TA), the service request network element, and a data storage network element.

The trust anchor may provide trusted services such as authentication, authorization, and access control (authentication authorization access control, AAA), which, for example, may be implemented by using a distributed ledger technology (distributed ledger technology, DLT). The trust anchor may store data that cannot be tampered with, for example, a public key, an identifier, or an index of a terminal device or a network element, transaction-related data, or important data that cannot be tampered with.

Optionally, a storage capability of the distributed ledger technology may be expanded in on-chain (on-chain) and off-chain (off-chain) storage manners. For example, original data is stored locally in the data agent network element or in the data storage network element (off-chain), a hash value for the original data or a hash value for a digest of packaged original data is stored in an expanded DLT (on-chain), and an address for pointing to the original data is also stored in the DLT (on-chain). The original data stored off-chain or the new hash value generated by the digest of the original data is compared with a hash value stored on-chain, to prevent the original data from being tampered with.

For example, the trust anchor may be deployed in a distributed or centralized manner. The trust anchor deployed in the distributed manner may be a node in the distributed ledger technology DLT (for example, a blockchain), and the like. The trust anchor deployed in the centralized manner may be implemented through reconstruction and evolution of existing security and trust mechanisms such as authentication, authorization, and access control.

For example, the trust anchor can implement a security and privacy protection mechanism for an entire data service procedure through data access control such as authentication, authorization, and access control, and in combination with a data security and privacy protection technology repository, can support security and privacy protection of the entire data service procedure, can support trusted data service requirements such as source tracing, auditability, and user data autonomous control, can support meeting requirements of data sharing and transaction on trusted mechanisms such as source tracing and auditability, can meet compliance requirements such as the personal information protection law (personal information protection law, PIPL) and the general data protection regulation (general data protection regulation, GDPR), and can provide a trusted data service. Compliance detection of user data processing can implement a decentralized verification mechanism, to avoid single-point trustworthiness and failure problems.

The service request network element may include an application, an application server, a network service NS network element, or the like. The application may be an application that is of an operator (or a communication service provider (communication service provider, CSP)) and that is used for network planning and optimization, network artificial intelligence (artificial intelligence, AI), and/or the like, or may be an application outside a mobile communication network (which may also be referred to as a third-party application). The service request network element may be independently deployed in a network as a network function or a network element.

The data storage network element may store various types of data, for example, streaming (streaming) data, batch (batch) data, log (log) information, AI model parameter configuration information, and intermediate data, and may extend a storage function of the data agent network element. For example, the DSF network element may be a centralized database, or may be a distributed database, for example, a distributed hash table DHT or an interplanetary file system (interplanetary file system, IPFS). For example, the data storage network element may be a data storage function (data storage function, DSF) network element, or may be evolved from the data storage function network element. The data storage network element may be deployed in the network as an NF or a network element.

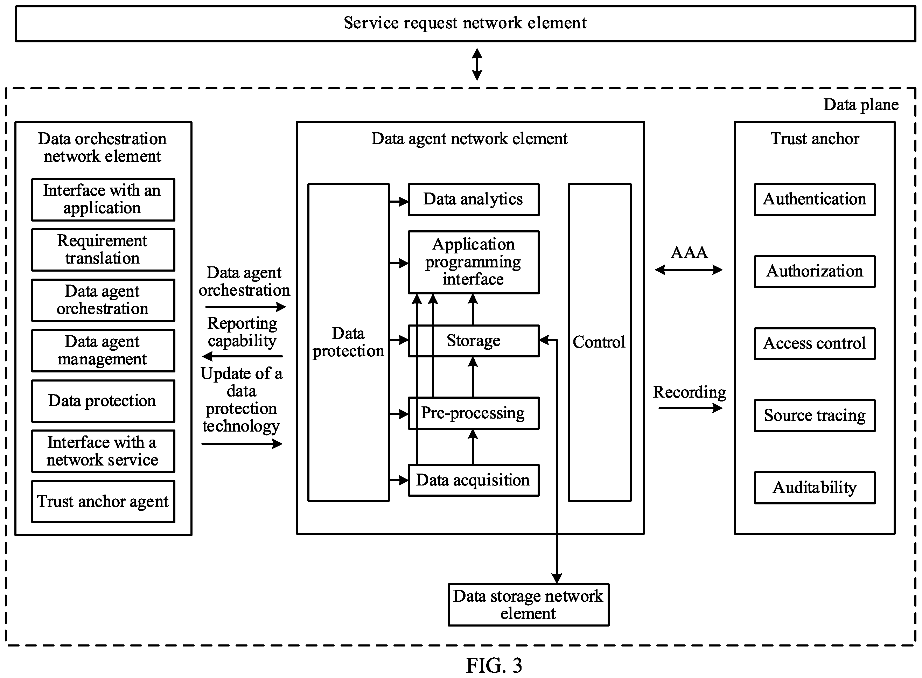

For example, FIG. 3 is a diagram of a function of a data service architecture according to an embodiment of this application.

The following describes a function of a data orchestration network element with reference to FIG. 3.

With reference to FIG. 3, the function that can be implemented by the data orchestration network element includes but is not limited to one or more of the following: an interface with an application, requirement translation, data agent orchestration, data agent management, data protection, an interface with a network service (network service, NS), and an interface with a trust anchor.

Interface with the application: The data orchestration network element may interact with a service request network element through the interface with the application. For example, the data orchestration network element receives a service request from the service request network element. For example, the service request may be a requirement filled in according to a standard template. For example, the standard template may be a service level agreement (service level agreement, SLA).

Requirement translation: The data orchestration network element translates the service request into service requirements on functions of data agent network elements. For example, the data orchestration network element translates the requirement such as the service level agreement into a requirement on a corresponding resource and a network configuration.

Data agent orchestration: The data agent network elements are orchestrated based on data service capabilities of the data agent network elements, to form a dynamic logical network topology to meet the service requirement.

For example, the data orchestration network element translates the requirement such as the service level agreement into the requirement on the corresponding resource and the network configuration, selects, based on the data service capabilities of the data agent network elements, data agent network elements participating in a current data service, and orchestrates the data agent network elements to form the dynamic logical network topology.

Optionally, the data orchestration network element may negotiate with another network service network element in a process of performing data agent orchestration. For example, if an algorithm and a computing power need to be used, the data orchestration network element may collaborate with another network service network element, and select a corresponding AI algorithm and computing power, and the network service network element pushes the algorithm.

Optionally, the data orchestration network element may dynamically specify a data agent network element that directly interacts with the service request network element, and send information about the data agent network element to the service request network element, so that the application can invoke an application programming interface (application programming interface, API) of the data agent network element, to obtain data, a processing result, or the like.

Data agent management: Request registration, deregistration, and the like requested from the data orchestration network element by a data agent network element are managed, and a data service capability and the like that are reported by the data agent network element are received.

Data protection: A data protection function may be implemented by using a data protection technology repository (data protection technology repository, DPTR). The data protection technology repository may include a data security and privacy protection algorithm repository, for example, a plurality of algorithms such as differential privacy, homomorphic encryption, multi-party computation, and zero-knowledge proof. The data orchestration network element may push or update information about the data protection technology repository to the data agent network element as required, which serves as a data protection technology (data protection technology, DPT) of the data agent network element. The data protection technology repository can be loosely coupled with the data orchestration network element. The data protection technology repository can be a common capability of a network element in the data service architecture, and can be independently evolved and optimized. The independent data protection technology repository facilitates compliance detection of end-to-end (end-to-end, E2E) data processing.

For example, the information about the data protection technology repository may include an identifier, an index, and configuration information that are of the data protection technology repository, and the data protection technology repository itself.

Interface with the network service: The data orchestration network element may interact with the network service network element through the interface with the network service. For example, the data orchestration network element may negotiate with the network service network element based on a service requirement. For example, if the algorithm and the computing power need to be used, the data orchestration network element may collaborate with the another network service network element.

Trust anchor agent: The trust anchor agent is an interface between the data orchestration network element and the trust anchor. The data orchestration network element may interact with the trust anchor by using a trust anchor agent function.

It needs to be noted that in embodiments of this application, the data orchestration network element may be divided into functional modules based on the foregoing functions or the following method embodiments. For example, each functional module corresponding to each function may be obtained through division, or two or more functions may be integrated into one module. The integrated module may be implemented in a form of hardware, or may be implemented in a form of a software functional module. It needs to be noted that in embodiments of this application, the division into the functions or the modules is an example, and is merely logical function division. During actual implementation, another division manner may be used.

The following describes a function of a data agent network element with reference to FIG. 3.

With reference to FIG. 3, the function that may be implemented by the data agent network element includes but is not limited to one or more of the following: control, data acquisition, pre-processing, storage, an application programming interface, data analytics, and data protection.

The data agent network element may implement data service collaboration and closed-loop management by performing the foregoing function, and may output data for different processing requirements as required.

Control: Functions of data agent network elements are orchestrated based on operations set by a data orchestration network element for the data agent network elements, to form a data pipeline. The control function may be implemented by a controller of the data orchestration network element.

For example, the data orchestration network element orchestrates the data agent network elements to form the dynamic logical network topology, and the data agent network elements orchestrate the functions of the data agent network elements to form the data pipeline, to implement automatic data management and dynamic on-demand configuration, promptly respond to a new service and a new requirement, support implementation of rich application scenarios, enable a new data service to quickly appear on a market, and shorten time to market (time to market, TTM).

Data acquisition (acquisition): Data is obtained. For example, the data may be obtained in a subscription/notification manner, or the data is obtained in a request/response manner. Optionally, the request may indicate a data reporting trigger manner, a trigger condition, a reporting periodicity, a data amount, and the like. Optionally, the data agent network element can support streaming data acquisition and batch data acquisition. Optionally, the data agent network element can support real-time data acquisition and non-real-time data acquisition. Optionally, the data agent network element can acquire various types of data. The data may be classified into several types. For example, the types of the data may include but are not limited to: network data, user data, AI model data, and internet of things (internet of things, IoT) data. The classification of the data is not limited in this application, and the data may be classified into more or fewer types, or the data may be classified into types from another perspective, or the data may not be classified into types.

In this way, data services of various types of data can be implemented by using a normalized data service architecture provided in this application.

Pre-processing (pre-processing): The pre-processing refers to performing cleaning, filling, smoothing, combination, standardization, and consistency checking on acquired original data, field extraction of the original data, format conversion, redundant data clearing, compression, filtering, merging, and/or other operations, to improve data quality and lay a foundation for subsequent processing (for example, analytics). The original data is eliminated, which may result in problems such as a data loss, data noise, data redundancy, and/or dataset imbalance.

Storage: Centralized and distributed storage is supported. Optionally, data that needs strict access protection or privacy protection, for example, user subscription data, is stored locally in the data agent network element.

Application programming interface: Each function of the data agent network element may directly provide a service for a service requester through the application programming interface API.

Data analytics (analytics): The data analytics is loosely coupled with the data agent network element, and can be deployed separately from the data agent network element as required. Various data analytics technologies can be supported, for example, AI training, AI inference, machine learning (machine learning, ML), and big data analytics. This data analytics function can invoke data services at levels such as data acquisition, pre-processing, and storage of the data agent network element through the API. Optionally, an AI model needed in a data analytics process may be preset locally in the data agent network element or pushed by the network service network element.

Data protection: Data is processed by using technologies such as k-anonymity (k-anonymity), l-diversity (l-diversity), and differential privacy, so that attackers cannot directly obtain sensitive information from anonymized data, to protect data privacy. The information about the data protection technology repository may be pre-installed in the data agent network element, or pushed by the DO as required, and security and privacy protection is performed on data at each level of the data agent network element.

It needs to be noted that in embodiments of this application, the data agent network element may be divided into functional modules based on the foregoing functions or the following method embodiments. For example, each functional module corresponding to each function may be obtained through division, or two or more functions may be integrated into one module. The integrated module may be implemented in a form of hardware, or may be implemented in a form of a software functional module. It needs to be noted that in embodiments of this application, the division into the functions or the modules is an example, and is merely logical function division. During actual implementation, another division manner may be used.

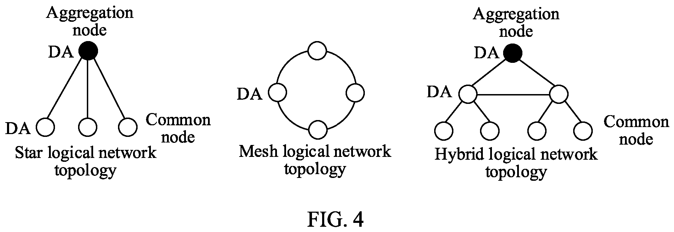

FIG. 4 is a schematic of a logical network topology according to an embodiment of this application. The following describes, with reference to FIG. 4, the logical network topology formed by orchestrating data agent network elements DAs by a data orchestration network element.

As shown in FIG. 4, the logical network topology may include but is not limited to: a star logical network topology, a mesh (mesh) logical network topology, and a hybrid logical network topology.

For example, in the star logical network topology, a DA as an aggregation node may acquire information about common nodes DAs, and may further process the acquired information. Optionally, the DA as the aggregation node may directly interact with a service request network element, and the common node DA may interact with the service request network element via the DA as the aggregation node. This is not limited in this application. The DA that directly interacts with the service request network element may be any DA. The star logical network topology is applicable to scenarios such as data aggregation and federated learning.

For example, in the mesh logical network topology, data collaboration is performed between the DAs, and any DA may be selected to directly interact with the service request network element. For example, in the hybrid (or referred to as hybrid hierarchical) logical network topology, the DA as the aggregation node may hierarchically acquire the information about the common nodes DAs, and may further process the acquired information. Similar to the star logical network topology, the DA as the aggregation node may directly interact with the service request network element, and the common node DA may interact with the service request network element via the DA as the aggregation node. This is not limited in this application. The DA that directly interacts with the service request network element may be any DA.

It needs to be noted that the logical network topology shown in FIG. 4 is merely an example provided in this application. In actual application, the data orchestration network element may orchestrate, as required, the data agent network elements DAs to form a logical network topology in any form, provided that a data service can be implemented.

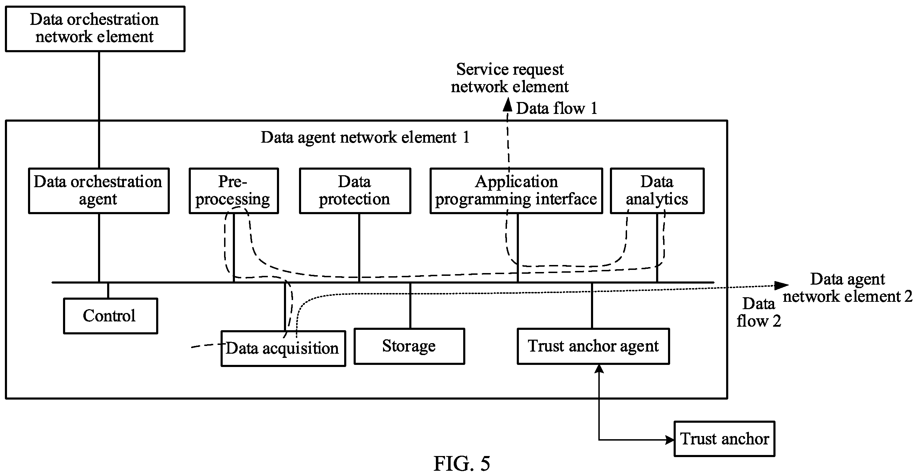

FIG. 5 is a diagram of an operation chain according to an embodiment of this application. The following describes, with reference to FIG. 5, the operation chain formed by controlling functions of a data agent network element by the data agent network element.

The operation chain is formed by orchestrating the functions of the data agent network element based on an operation that is set by a data orchestration network element for the data agent network element and that is obtained by the data agent network element from the data orchestration network element. For example, as shown in FIG. 5, it is assumed that an operation that is set for a data agent network element 1 and that is obtained by the data agent network element 1 from the data orchestration network element includes: after pre-processing like merging is performed on data obtained from another data agent network element, analyzing the data to obtain an analytics result, and sending the analytics result to a service request network element. The data agent network element 1 orchestrates functions to form an operation chain 1 shown in 5: acquiring data, then pre-processing the data, analyzing a pre-processing result, and sending an analytics result to a service request network element through an application programming interface.

For another example, as shown in FIG. 5, it is assumed that an operation that is set for a data agent network element 1 and that is obtained by the data agent network element 1 from the data orchestration network element includes: If acquired data is transmitted to a data agent network element 2, the data agent network element 1 orchestrates functions to form an operation chain 2 shown in FIG. 5: acquiring the data, and sending the data to the data agent network element 2.

It needs to be noted that the operation chain 1 and the operation chain 2 shown in FIG. 5 are merely examples provided in this application, and do not constitute a limitation on a sequence of performing the functions of the data agent network element. The sequence of performing the functions of the data agent network element may be dynamically adjusted based on a service requirement.

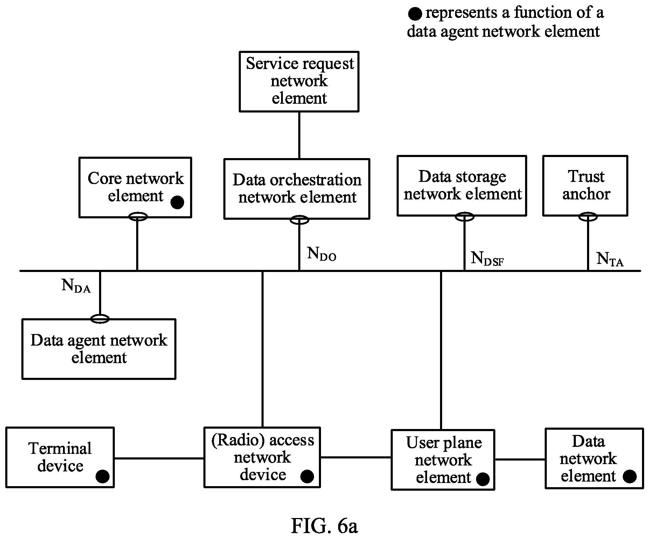

For example, FIG. 6a to FIG. 6d are diagrams of some network architectures according to embodiments of this application. The communication system shown in FIG. 1 is applicable to the network architectures shown in FIG. 6a to FIG. 6d.

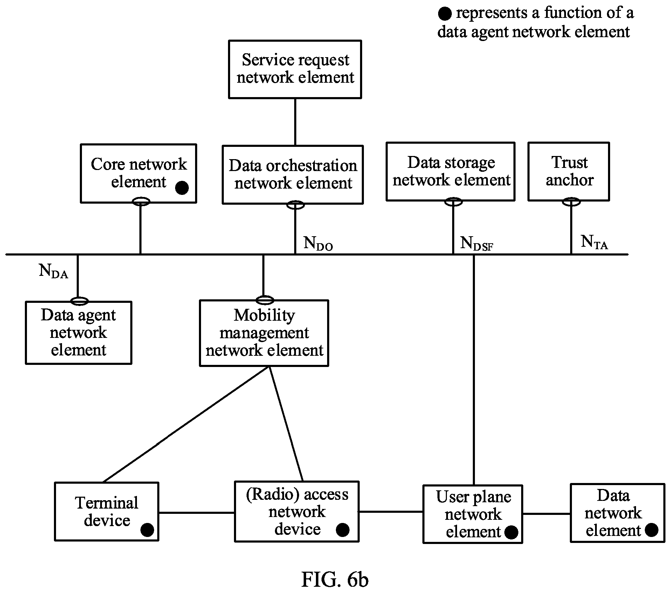

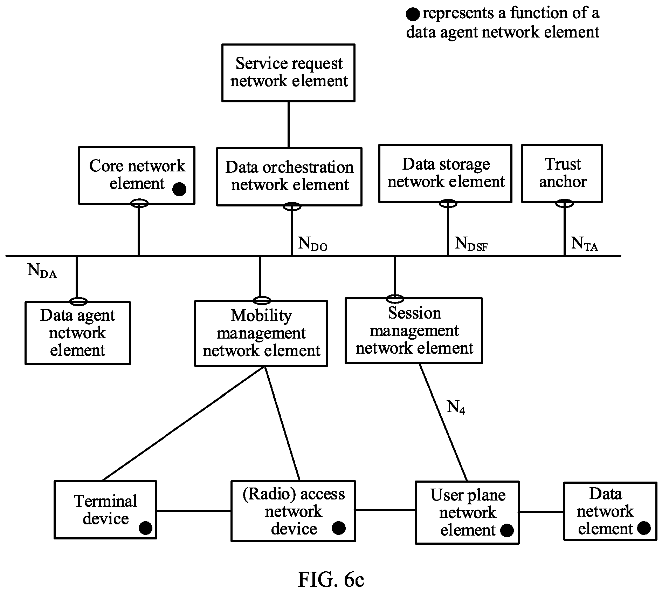

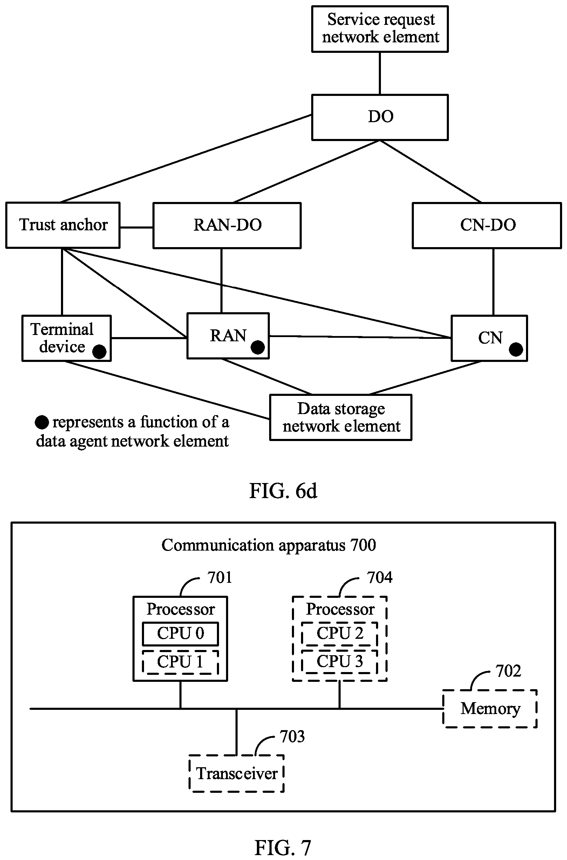

FIG. 6a is a diagram of a network architecture used when a core network device and an access network device are all service-oriented. FIG. 6b is a diagram of a network architecture used when an access network device is not service-oriented and a core network is service-oriented. FIG. 6c is a diagram of a network architecture used when an access network device is not service-oriented and a core network is service-oriented (an N4 interface is reserved). FIG. 6d is a diagram of a network architecture in which network elements are directly interconnected.

With reference to FIG. 6a to FIG. 6c, the network architectures may include but are not limited to one or more of the following: a service request network element, a terminal device, an access network device, a user plane network element, a data network element, a core network element, a data orchestration network element, a data agent network element, a data storage network element, a trust anchor, and a service request network element. For a specific implementation, refer to descriptions in FIG. 1 to FIG. 5. Details are not described herein again. The network architectures may further include but are not limited to one or more of the following: a mobility management network element (FIG. 6b and FIG. 6c). The network architecture may further include but is not limited to one or more of the following: a session management network element (FIG. 6c). The core network element shown in FIG. 6a to FIG. 6c may include any core network element other than the user plane network element, the mobility management network element, and/or the session management network element.

The data agent network element may be deployed in any network element other than the data orchestration network element, the data storage network element, and the trust anchor in the network architecture. In other words, any network element other than the data orchestration network element, the data storage network element, and the trust anchor in the network architecture may implement a function of the data agent network element.

The data orchestration network element interacts with another network element (for example, the service request network element, the data agent network element, the core network element, and the trust anchor) through a service-oriented interface N_{DO}, the data agent network element interacts with another network element (for example, the service request network element, the data orchestration network element, the core network element, the terminal device, the access network device, the data storage network element, and the trust anchor) through a service-oriented interface N_{DA}, the data storage network element interacts with another network element (for example, the data agent network element, the core network element, the terminal device, and the access network device) through a service-oriented interface N_{DSF}, and the trust anchor interacts with another network element (for example, the data orchestration network element, the data agent network element, the core network element, the terminal device, the access network device, the data storage network element, and the trust anchor) through a service-oriented interface NTA.

In the network architectures shown in FIG. 6a to FIG. 6c, the service-oriented interface may be used, to improve independence between network functions, implement deployment flexibility and efficient scalability, and improve development efficiency of a new function.

With reference to FIG. 6d, the network architecture may include but is not limited to one or more of the following: a service request network element, a data orchestration network element, an access-network-domain data orchestration network element (RAN-DO), a CN-domain data orchestration network element (CN-DO), an access network device RAN, the core network element, the terminal device, the trust anchor, and the data storage network element.

In the architecture shown in FIG. 6d, the data orchestration network elements are hierarchically deployed. The data orchestration network element may manage the RAN-domain data orchestration network element and the CN-domain data orchestration network element. The RAN-domain data orchestration network element may directly interact with the CN-domain data orchestration network element. The RAN-domain data orchestration network element may directly interact with the access network device. The CN-domain data orchestration network element may directly interact with the core network element. The trust anchor may directly interact with any network element in the network architecture. The data storage network element may directly interact with the terminal device, the access network device, and the core network element.

The network elements in the network architecture shown in FIG. 6d are directly interconnected, so that backward compatibility of the architecture can be met.

It needs to be noted that the communication method provided in embodiments of this application is applicable to any two nodes shown in FIG. 1 to FIG. 6d. For a specific implementation, refer to the following method embodiments. Details are not described herein again.

It should be noted that, the solutions in embodiments of this application may be further applied to another communication system, and a corresponding name may also be replaced with a name of a corresponding function in the another communication system.

FIG. 7 is a diagram of a structure of a communication apparatus 700 that may be configured to perform a communication method according to an embodiment of this application. The communication apparatus 700 may be a data orchestration network element, a data agent network element, a service request network element, or a trust anchor, or may be a chip or another component or assembly used in the data orchestration network element, the data agent network element, the service request network element, or the trust anchor.

As shown in FIG. 7, a communication apparatus 700 may include a processor 701. Optionally, the communication apparatus 700 may further include one or more of a memory 702 and a transceiver 703. The processor 701 and the one or more of the memory 702 and the transceiver 703 may be coupled, for example, may be connected through a communication bus, or the processor 701 may be independently used.

Each component of the communication apparatus 700 is described below in detail with reference to FIG. 7.

The processor 701 is a control center of the communication apparatus 700, and may be one processor, or may be a collective term of a plurality of processing elements. For example, the processor 701 is one or more central processing units (central processing units, CPUs), or may be an application-specific integrated circuit (application-specific integrated circuit, ASIC), or is configured as one or more integrated circuits implementing embodiments of this application, for example, one or more microprocessors (digital signal processors, DSPs) or one or more field programmable gate arrays (field programmable gate arrays, FPGAs).

The processor 701 may run or execute a software program stored in the memory 702, and invoke data stored in the memory 702, to perform various functions of the communication apparatus 700.

During specific implementation, in an embodiment, the processor 701 may include one or more CPUs, such as a CPU 0 and a CPU 1 shown in FIG. 7.

During specific implementation, in an embodiment, the communication apparatus 700 may alternatively include a plurality of processors, such as the processor 701 and a processor 704 shown in FIG. 7. Each of the processors may be a single-core processor (single-CPU) or may be a multi-core processor (multi-CPU). The processor herein may be one or more communication devices, circuits, and/or processing cores configured to process data (for example, computer program instructions).

The memory 702 may be a read-only memory (read-only memory, ROM) or another type of static storage communication device that can store static information and instructions, or a random access memory (random access memory, RAM) or another type of dynamic storage communication device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage communication device, or any other medium that can be configured to carry or store expected program code in a form of instructions or a data structure and that can be accessed by a computer, but is not limited thereto. The memory 702 may be integrated with the processor 701, or may exist independently, and is coupled to the processor 701 through an input/output port (not shown in FIG. 7) of the communication apparatus 700. This is not specifically limited in this embodiment of this application.

The memory 702 is configured to store a software program for executing the solutions of this application, and the processor 701 controls the execution. For the foregoing specific implementation, refer to the following method embodiments. Details are not described herein again.

The transceiver 703 is configured for communication with another communication apparatus. For example, when the communication apparatus 700 is the data orchestration network element, the transceiver 703 may be configured to communicate with the data agent network element, the service request network element, the trust anchor, and/or the like. For another example, when the communication apparatus 700 is the data agent network element, the transceiver 703 may be configured to communicate with the data orchestration network element, the service request network element, the trust anchor, and/or the like. For another example, when the communication apparatus 700 is the service request network element, the transceiver 703 may be configured to communicate with the data orchestration network element, the data agent network element, the trust anchor, and/or the like. In addition, the transceiver 703 may include a receiver and a transmitter (not separately shown in FIG. 7). The receiver is configured to implement a receiving function, and the transmitter is configured to implement a sending function. The transceiver 703 may be integrated with the processor 701, or may exist independently, and is coupled to the processor 701 through an input/output port (not shown in FIG. 7) of the communication apparatus 700. This is not specifically limited in this embodiment of this application.

It needs to be noted that, the structure of the communication apparatus 700 shown in FIG. 7 does not constitute a limitation on the communication apparatus. An actual communication apparatus may include more or fewer components than those shown in the figure, combine some components, or have different component arrangement.

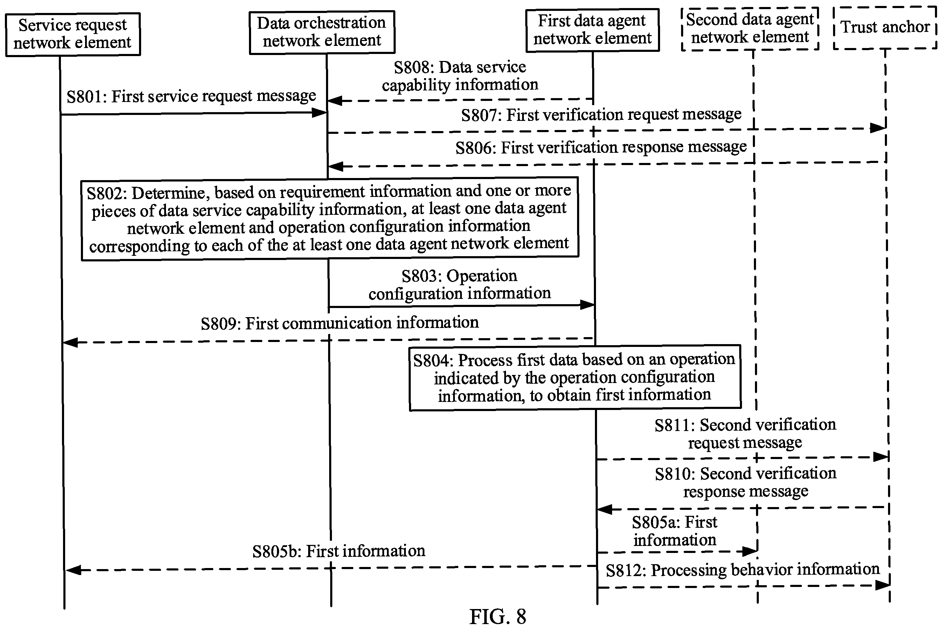

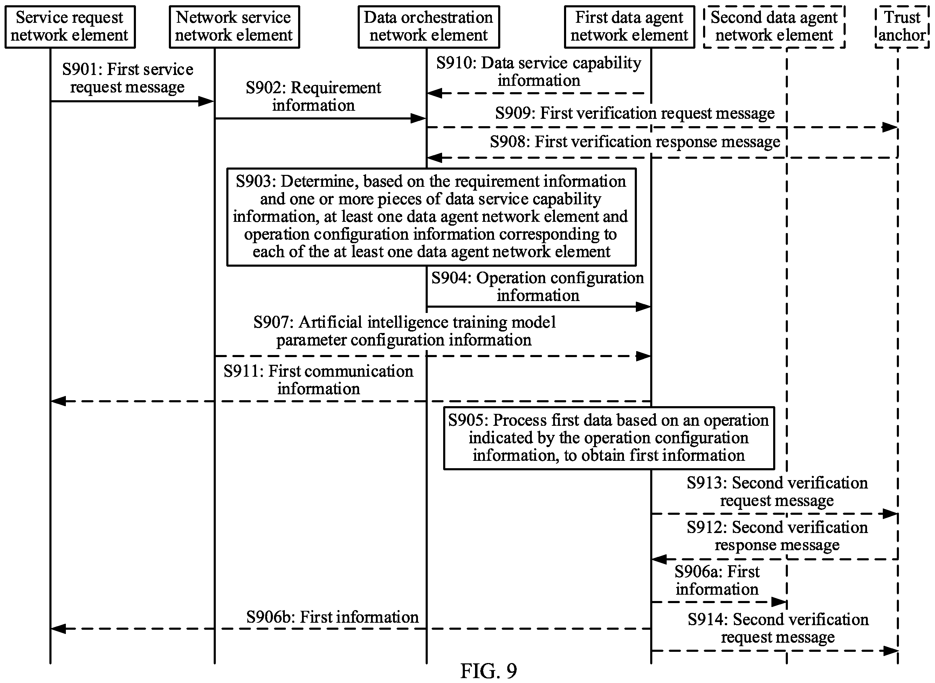

The following specifically describes, with reference to FIG. 8 and FIG. 9, communication methods according to embodiments of this application.

For example, FIG. 8 is a schematic flowchart of a communication method according to an embodiment of this application.

As shown in FIG. 8, the communication method includes the following steps.

S801: A service request network element sends a first service request message to the data orchestration network element. Correspondingly, the data orchestration network element receives the first service request message.

Optionally, the first service request message may be for requesting an application service or a service service.

Optionally, the service request network element may be an application, an application server, a network service network element, or the like.

In this embodiment of this application, the application service may be a service requested by the application or the application server, and the service service may be a service requested by the network service network element. In different scenarios, services requested by using the first service request message may be different.

For example, the first service request message may be for requesting but is not limited to be for requesting one or more of the following services: a service related to network data, a service related to user data, a service related to artificial intelligence model data, and a service related to internet of things data.

Optionally, the network data may include but is not limited to one or more of the following: a log (for example, a debug log, a security log, or a call history record (call history record, CHR) log), an alarm, traffic statistics, configuration data, minimization of drive tests (minimization of drive tests, MDT) data, user session information, integrated sensing and communication (integrated sensing and communication, ISAC) data, digital twin network data, network metadata, a network status, and a network behavior.

For example, the network data may include data acquired by an access network device, data acquired by a terminal device, and/or the like.

Optionally, the user data may include but is not limited to one or more of the following: user subscription information, for example, a user profile (profile), and the like.

Optionally, the internet of things data may include but is not limited to one or more of the following: environment data, sensor-type data, and measurement data of an internet of things terminal.

For example, the internet of things data may include data acquired by an SIoT terminal device and data acquired by a non-SIoT terminal device by using an internet of things gateway.

Optionally, the artificial intelligence AI model data may include but is not limited to one or more of the following: a training dataset corresponding to a task, a test dataset corresponding to the task, local/global model data, and AI metadata.

Optionally, the AI model data may be generated by training original data or pre-processed original data.

Optionally, the data may be classified from a plurality of dimensions such as a data type, a data source, a data consumer, and being orthogonal as much as possible.

In this way, diversified data sources and various data types exist in a network, so that processing procedures for the data are greatly different. The data is properly classified, so that the processing procedures can be simplified, system complexity can be reduced, and data services of various data types can be supported.

It needs to be noted that, the classification of the data is not limited in this application, and the data may be classified into more or fewer types, or the data may be classified into types from another perspective, or the data may not be classified into types.

For example, the network service network element sends a first service request message to the data orchestration network element, where the first service request message is for requesting to access user subscription data in the data agent network element.

For example, an application that is of an operator and that is used for network planning and optimization (which may be briefly referred to as a network planning and optimization application) sends a first service request message to the data orchestration network element, where the first service request message is for requesting to train a federated learning model, and the federated learning model is used to predict quality of service.

For example, the network planning and optimization application sends the first service request message to the data orchestration network element, where the first service request message is for requesting to predict quality of service of an area A.

In some embodiments, the request for predicting the quality of service of the area A may be decomposed into the following requests: a request for training the federated learning model (a request 1) and a request for predicting the quality of service of the area A by using the (trained) federated learning model (a request 2).

Similarly, a process of predicting the quality of service of the area A may be decomposed into the following phases: training the federated learning model (Phase 1) and predicting the quality of service of the area A by using the (trained) federated learning model (Phase 2). In this way, after receiving the request for predicting the quality of service of the area A, if the service request network element locally stores the needed federated learning model, Phase 2 may be directly performed; or if the service request network element does not locally store the needed federated learning model, Phase 2 is performed after Phase 1 is performed

Phase 1: The request for training the federated learning model is translated into corresponding requirement information. Data agent network elements participating in the current data service are selected based on data service capabilities of the data agent network elements, and the data agent network elements are orchestrated to form a dynamic logical network topology. A data agent network element (for example, a data agent network element 1) with a strong computing capability is selected as a server (server) end from the data agent network elements participating in the current data service, to train the federated learning model. Another data agent network element (for example, a data agent network element other than the data agent network element 1 in the data agent network elements participating in the current data service) serves as a client (client) end, to provide data used for training the federated learning model. After a plurality of rounds of training, the federated learning model is generated, is sent by the data agent network element (for example, the data agent network element 1 as the server end DA) to the service request network element, or is stored in the data agent network element or a DSF as required.

It needs to be noted that Phase 1 is applicable to a scenario in which the service request network element requests to train the federated learning model.

Phase 2: The request for predicting the quality of service of the area A in a future time period by using the federated learning model is translated into corresponding requirement information. Data agent network elements participating in the current data service are selected based on data service capabilities of the data agent network elements, and the data agent network elements are orchestrated to form a dynamic logical network topology. A data agent network element (for example, a data agent network element 1) with a strong computing capability is selected from the data agent network elements participating in the current data service, to predict the quality of service. Another data agent network element (for example, a data agent network element other than the data agent network element 1 in the data agent network elements participating in the current data service) provides, for the data agent network element 1, data (for example, real-time network data) for predicting the quality of service, or may perform some operations (for example, processing such as anonymization) on the data. The data agent network element 1 performs inference by using the federated learning model and data (original data or intermediate data), to obtain a quality of service prediction result, and sends the result to the service request network element.

It needs to be noted that the data agent network element 1 may send the obtained intermediate data to the service request network element, and the service request network element performs inference by using the federated learning model and the intermediate data, to obtain the quality of service prediction result. The federated learning model in the service request network element may be obtained from the data agent network element, or may be preconfigured. This is not limited in this application.

For example, in an abnormal behavior detection scenario of the IoT terminal device, the application or the network service network element sends a first service request message to the data orchestration network element. The first service request message is for requesting the internet of things data, intermediate data obtained by processing (for example, pre-processing or analyzing) the internet of things data, an abnormal behavior detection result of the IoT terminal device, or the like.

In some embodiments, the first service request message may be a requirement filled in according to a standard template.

For example, the standard template may be a service level agreement.

S802: The data orchestration network element determines, based on the requirement information and one or more pieces of data service capability information, at least one data agent network element and operation configuration information corresponding to each of the at least one data agent network element.

For example, the requirement information may be a service requirement that is on first data and that is determined based on the service requested by using the first service request message.

Optionally, the first data may include: data acquired from a mobile communication network and/or synthesized data.

For example, the first data may include but is not limited to one or more of the following: data on a terminal device side, data of each function node on an access network device side, data of each function node on a transfer network side, data of each function node on a core network side, data of each function node of OAM, and synthesized data.

For example, the synthesized data may be artificially synthesized data.

For example, a face may be generated through adversarial learning, and data of the face may be considered as synthesized data.

For example, when an amount of a specific type of data is small, for example, an amount of some abnormal data is small, synthesized data may be used.

Optionally, the synthesized data may be used to train an artificial intelligence model or the like.

For example, the first data may be classified, and the first data may include but is not limited to one or more of the following: network data, user data, artificial intelligence model data, and internet of things data.

Optionally, the data may be classified from a plurality of dimensions such as a data type, a data source, a data consumer, and being orthogonal as much as possible.

It needs to be noted that, the classification of the first data is not limited in this application, and the first data may be classified into more or fewer types, or the first data may be classified into types from another perspective, or the first data may not be classified into types.

For example, the one or more pieces of data service capability information are in one-to-one correspondence with one or more data agent network elements.

For example, an example in which a plurality of pieces of data service capability information include data service capability information 1, data service capability information 2, and data service capability information 3 is used. The data service capability information 1 corresponds to a data agent network element 1, the data service capability information 2 corresponds to a data agent network element 2, and the data service capability information 3 corresponds to a data agent network element 3.

It needs to be noted that, in this embodiment of this application, the plurality of data agent network elements may be different types of data agent network elements or a same type of data agent network element.

For example, the data agent network element 1 to the data agent network element 3 are all (or deployed on) access network devices. For another example, the data agent network element 1 is a core network element, the data agent network element 2 is an access network device, and the data agent network element 3 is a terminal device. For another example, the data agent network element 1 is an access network device, the data agent network element 2 is a terminal device, and the data agent network element 3 is a terminal device.

For example, the at least one data agent network element may be at least one of the one or more data agent network elements.

For example, the data orchestration network element determines, from the data agent network element 1, the data agent network element 2, and the data agent network element 3 based on the requirement information, the data service capability information 1, the data service capability information 2, and the data service capability information 3, a data agent network element participating in a current data service, for example, selects the data agent network element 1 and the data agent network element 2 to participate in the current data service, and determines operation configuration information respectively corresponding to the data agent network element 1 and the data agent network element 2.

For example, operation configuration information of any one of the at least one data agent network element may indicate an operation performed by the any one data agent network element on the first data.

For example, the operation configuration information corresponding to the data agent network element 1 indicates an operation performed by the data agent network element 1 on the first data or data generated based on the first data. The operation configuration information corresponding to the data agent network element 2 indicates an operation performed by the data agent network element 2 on the first data or the data generated based on the first data.

For example, the requirement information corresponds to at least one of the one or more pieces of data service capability information.

For example, the data agent network element determines, based on the requirement information and at least one piece of data service capability information, a data agent network element participating in the current data service, where a data service capability of the selected data agent network element needs to be capable of meeting the service requirement on the first data in the requirement information, and the selected data agent network element needs to have a capability of completing the current data service. In this way, the data service can be implemented.

In some embodiments, data service capability information of any one of the one or more data agent network elements may include but is not limited to one or more of the following: an identifier of the any one data agent network element, location information of the any one data agent network element, a data acquisition capability, a data pre-processing capability, a data storage capability, a data reporting capability, a data analytics capability, a capability of interacting with the service request network element, a data protection capability, and a data compression capability.

Optionally, there may be a correspondence between the data service capability information and the identifier of the data agent network element.

Optionally, the location information may be information about a geographical location, and the location information may include longitude and latitude, or the like.

Optionally, the data acquisition capability may include a type of data that can be acquired. The type of the data may include but is not limited to one or more of the following: network data, user data, internet of things data, and artificial intelligence model data.

Optionally, the data pre-processing capability may include a supported pre-processing manner, for example, field extraction of the original data, format conversion, redundant data clearing, compression, and merging.

Optionally, the data storage capability may include but is not limited to one or more of the following: a data storage capacity, an encryption algorithm for storing data, and a storage manner.

Optionally, the data reporting capability may include but is not limited to one or more of the following: a minimum reporting periodicity, an amount of data reported at a time, a maximum amount of reported data, whether file upload is supported, and whether streaming data is supported.

Optionally, the data analytics capability may include but is not limited to one or more of the following: a supported analytics task, whether AI training is supported, and whether AI inference is supported.

Optionally, the capability of interacting with the service request network element may include but is not limited to: whether an application programming interface service can be provided.

Optionally, the data protection capability may include but is not limited to one or more of the following: supported data protection technologies, for example, k-anonymity (k-anonymity), l-diversity (l-diversity), differential privacy, homomorphic encryption, and secure multi-party computation.

Optionally, the data compression capability may include but is not limited to one or more of the following: a supported data compression algorithm, for example, Huffman coding (Huffman Coding) or arithmetic coding, and the like.

It needs to be noted that, for implementations of the data acquisition capability, the data pre-processing capability, the data storage capability, the data reporting capability, the data analytics capability, the capability of interacting with the service request network element, the data protection capability, and the data compression capability, further refer to descriptions of the function of the data agent network element in FIG. 2. That the data agent network element has a corresponding function may indicate that the data agent network element has a corresponding capability.

In some embodiments, the requirement information may include but is not limited to one or more of the following service requirements: a geographical location, data acquisition, data pre-processing, data storage, data reporting, data analytics, the interaction with the service request network element, data protection, and data compression.

Optionally, the requirement information may correspond to a data service task identifier (data service task Identify, DSID).

For example, the data service task identifier may identify a data service task corresponding to the first service request message.

Optionally, the data orchestration network element may perform requirement translation on the service requested by using the first service request message, where the translation (or mapping) is a service requirement on the functions of the data agent network element.

For example, assuming that the first service request message is for requesting to predict the quality of service of the area A, and the data orchestration network element performs requirement translation, obtained requirement information may include: the area A, the data acquisition, the data pre-processing, the data analytics, the interaction with the service request network element, and the type of the first data: the network data.

In some embodiments, the operation indicated by the operation configuration information may include but is not limited to one or more of the following: the data acquisition, the data pre-processing, the data protection, the data storage, the data analytics, and the interaction with the service request network element.

It needs to be noted that the operation indicated by the operation configuration information in this application is different from common encoding/decoding, a modulation/demodulation operation, and rate matching.

It needs to be noted that, for implementations of these operations such as the data acquisition, the data pre-processing, the data storage, the data analytics, the interaction with the service request network element, and the data protection, further refer to descriptions of the function of the data agent network element in FIG. 2 and descriptions of the data service capability information in this application. Details are not described herein again.

In some embodiments, the method provided in this embodiment of this application may further include: The data orchestration network element determines first communication information.

Optionally, the first communication information may indicate information about a data agent network element that is in the at least one data agent network element and that directly communicates with the service request network element.

For example, assuming that the data agent network element that directly communicates with the service request network element is the data agent network element 1, the first communication information may include but is not limited to one or more of the following: an address of the data agent network element 1, an identifier of the data agent network element 1, and an index of the data agent network element 1.

Optionally, the first communication information may be determined based on data service capability information of the at least one data agent network element.

For example, a data agent network element that has a capability of interacting with the service request network element is selected from the at least one data agent network element, as a data agent network element that directly communicates with the service request network element.

In other words, the data orchestration network element may select, from the determined data agent network elements participating in the current data service, a data agent network element that directly communicates with the service request network element.

The following uses the scenario of requesting to train the federated learning model (for example, Phase 1 in S802) as an example to describe how the data orchestration network element determines the data agent network element participating in the current data service and the operation configuration information corresponding to the data agent network element.

For example, assuming that the first service request message is for requesting to train an AI model, and the data orchestration network element performs requirement translation, obtained requirement information may include: the area A, the data acquisition, the data pre-processing, the data analytics, and the interaction with the service request network element.

The data orchestration network element determines, from the data agent network element 1, the data agent network element 2, and the data agent network element 3 based on the requirement information, the data service capability information 1, the data service capability information 2, and the data service capability information 3, data agent network elements participating in the current data service. The data service capability information 1 to the data service capability information 3 respectively correspond to the data agent network element 1 to the data agent network element 3.

It is assumed that the data service capability information 1 includes: the area A, the supported data pre-processing, the supported data storage, the supported AI training and AI inference, the supported interaction with the service request network element, and the supported data acquisition.

It is assumed that the data service capability information 2 includes: the area A, the supported data pre-processing, the unsupported AI training and AI inference, the unsupported interaction with the service request network element, and the supported data acquisition.

It is assumed that the data service capability information 3 includes: an area B, the supported data pre-processing, the supported data storage, the unsupported AI training and AI inference, the supported interaction with the service request network element, and the supported data acquisition.

The data orchestration network element may determine, based on the requirement information, the data service capability information 1, the data service capability information 2, and the data service capability information 3, that the data agent network element 1 and the data agent network element 2 can jointly implement a service requirement in the requirement information. First, a geographical location of the data agent network element 3 is the area B rather than the area A. Second, the data agent network element 3 does not support the AI training and the AI inference, and the data agent network element 3 cannot participate in training of the AI model.

The data orchestration network element determines, based on the requirement information, the data service capability information 1, and the data service capability information 2, operation configuration information 1 corresponding to the data agent network element 1 and operation configuration information 2 corresponding to the data agent network element 2. For example, the operation configuration information 1 includes: original data acquisition, the data pre-processing, the AI training and the AI inference, and the interaction with the service request network element. The operation configuration information 2 includes: the original data acquisition, the data pre-processing, and interaction with the data agent network element 1.

The following uses the scenario of requesting to predict the quality of service of the area A (for example, Phase 2 in S802) as an example to describe how the data orchestration network element determines the data agent network element participating in the current data service and the operation configuration information corresponding to the data agent network element.

The data orchestration network element determines, from the data agent network element 1, the data agent network element 2, and the data agent network element 3 based on the requirement information, the data service capability information 1, the data service capability information 2, and the data service capability information 3, data agent network elements participating in the current data service. The data service capability information 1 to the data service capability information 3 respectively correspond to the data agent network element 1 to the data agent network element 3.

It is assumed that the requirement information includes: the area A, the data acquisition, the data pre-processing, the data analytics, and the interaction with the service request network element.

It is assumed that the data service capability information 1 includes: the area A, the supported data pre-processing, the supported data storage, the supported AI training and AI inference, the supported interaction with the service request network element, and the supported data acquisition.

It is assumed that the data service capability information 2 includes: the area A, the supported data pre-processing, the unsupported AI training and AI inference, the unsupported interaction with the service request network element, and the supported data acquisition.

It is assumed that the data service capability information 3 includes: an area B, the supported data pre-processing, the supported data storage, the unsupported AI training and AI inference, the supported interaction with the service request network element, and the supported data acquisition.

The data orchestration network element may determine, based on the requirement information, the data service capability information 1, the data service capability information 2, and the data service capability information 3, that the data agent network element 1 and the data agent network element 2 can jointly implement a service requirement in the requirement information. A geographical location of the data agent network element 3 is the area B rather than the area A, and the data agent network element 3 cannot participate in prediction of the quality of service of the area A.

The data orchestration network element determines, based on the requirement information, the data service capability information 1, and the data service capability information 2, operation configuration information 1 corresponding to the data agent network element 1 and operation configuration information 2 corresponding to the data agent network element 2. For example, the operation configuration information 1 includes: the AI training and the AI inference and the interaction with the service request network element. The operation configuration information 2 includes: the original data acquisition, the data pre-processing, and interaction with the data agent network element 1.

In a possible design manner, S802 may include: When the service request network element has the permission to access the first data, the data orchestration network element determines, based on the requirement information and the one or more pieces of data service capability information, the at least one data agent network element and the operation configuration information corresponding to each of the at least one data agent network element.

In this way, the data agent network element participating in the data service and the corresponding operation configuration information are determined only when the service request network element has the permission to access the first data; or the data agent network element participating in the data service and the corresponding operation configuration information are not determined when the service request network element has no permission to access the first data. This can implement an E2E trusted service requirement on data.

In some embodiments, the method provided in this embodiment of this application may further include the following step: S806: The trust anchor sends a first verification response message to the first data agent network element. Correspondingly, the data orchestration network element receives the first verification response message from the trust anchor.

Optionally, the first verification response message may indicate that the service request network element has the permission to access the first data, or indicate that the service request network element has no permission to access the first data.

In other words, whether the service request network element has the permission to access the first data may be obtained by the data orchestration network element from the trust anchor.

It needs to be noted that an execution sequence for S806 is not limited in this embodiment of this application. For example, S806 may be performed before S802.

In some embodiments, the method provided in this embodiment of this application may further include the following step: S807: The data orchestration network element sends a first verification request message to the trust anchor. Correspondingly, the trust anchor receives the first verification request message from the data orchestration network element.

Optionally, the first verification request message may be for requesting to verify whether the service request network element has the permission to access the first data.

It needs to be noted that S807 may be performed before S806.

In a possible design method, the method provided in this embodiment of this application may further include the following step: S808: The one or more data agent network elements send the data service capability information to the data orchestration network element. Correspondingly, the data orchestration network element receives the data service capability information corresponding to the one or more data agent network elements.

It is assumed that the determined at least one data agent network element includes a first data agent network element. In S808 in FIG. 8, the first data agent network element is used as an example for description, where the first data agent network element sends data service capability information to the data orchestration network element. Correspondingly, the data orchestration network element receives the data service capability information from the first data agent network element.

It needs to be noted that an execution sequence for S808 is not limited in this application. For example, S808 may be performed before S801, or S808 may be performed before S802.

In a possible design method, the method provided in this embodiment of this application may further include: The one or more data agent network elements register with the data orchestration network element, which may be performed before or simultaneously with S808. This is not limited in this application.

S803: The data orchestration network element sends the operation configuration information to the first data agent network element. Correspondingly, the first data agent network element receives the operation configuration information from the data orchestration network element.

For example, the operation configuration information may indicate an operation performed by the first data agent network element on the first data.

In this way, the data orchestration network element sends corresponding operation configuration information to each of the at least one data agent network element.

In a possible design method, the method provided in this embodiment of this application may further include: The data orchestration network element sends updated information about a data security and privacy protection technology repository and/or updated information about an analytics tool repository to one or more of the at least one data agent network element. Correspondingly, the one or more of the at least one data agent network element receive the updated information about the data security and privacy protection technology repository and/or the updated information about the analytics tool repository from the data orchestration network element.

For example, the at least one data agent network element may include the first data agent network element. The first data agent network element receives the updated information about the data security and privacy protection technology repository and/or the updated information about the analytics tool repository from the data orchestration network element.

Optionally, the information about the data security and privacy protection technology repository may include but is not limited to one or more of the following: an identifier of the data security and privacy protection technology repository, an index of the data security and privacy protection technology repository, and the data security and privacy protection technology repository.

Optionally, the information about the analytics tool repository may include but is not limited to one or more of the following: an identifier of the analytics tool repository, an index of the analytics tool repository, and the analytics tool repository itself.

In other words, if the data security and privacy protection technology repository, the analytics tool repository, and the like are updated, the data orchestration network element may push either updated information or the data security and privacy protection technology repository, the analytics tool repository, and the like to the data agent network element. In this way, data security protection, data privacy protection, or the like can be implemented.

It needs to be noted that, that the data orchestration network element sends the operation configuration information to the first data agent network element and that the data orchestration network element sends updated information about a data security and privacy protection technology repository and/or updated information about an analytics tool repository may be performed in a same step, or may be separately performed. This is not limited in this application.

In a possible design method, the method provided in this embodiment of this application may further include the following step: S809: The data orchestration network element sends the first communication information to the service request network element. Correspondingly, the service request network element receives the first communication information from the data orchestration network element.

In this way, the service request network element may establish direct interaction with the first data agent network element based on the received first communication information, and may directly receive a message from the first data agent network element.

It needs to be noted that S809 may be performed after S802. An execution sequence of S809 and S803 is not limited in this application.

S804: The first data agent network element processes the first data based on the operation indicated by the operation configuration information, to obtain first information.

For example, the first data agent network element obtains the operation indicated by the operation configuration information; orchestrates the functions of the first data agent network element to form an operation chain, where an output of a former function is an input of a latter function; and processes the first data based on the operation chain, to obtain the first information.

Optionally, the first information may be original data, intermediate data, an analytics result, or the like.

It needs to be noted that, for a specific implementation of the operation configuration information, refer to corresponding descriptions in S802. Details are not described herein again.

In some embodiments, S804 may include the following step 1 and step 2.

Step 1: The first data agent network element sends a data request message to a third data agent network element based on the operation configuration information. Correspondingly, the third data agent network element receives the data request message from the first data agent network element.

Optionally, the data request message may be for requesting but is not limited to be for requesting one or more of the following data: network data, user data, internet of things data, and artificial intelligence model data.

For example, the operation configuration information may include: acquiring the first data from the third data agent network element.

It needs to be noted that the first data agent network element and the third data agent network element may be different types of data agent network elements or a same type of data agent network element.

For example, assuming that the first data agent network element is an access network device 1, the third data agent network element may be an access network device 2 or a terminal device.

In this way, inter-domain data agent network elements may be connected, and a cross-domain data service architecture may be formed.

Optionally, the data request message may include security information.

Optionally, the security information may be used to verify whether the first data agent network element has permission to access the first data.

For example, the security information may include but is not limited to a private key signature.

In this way, whether the first data agent network element has the permission to access the first data may be verified.

Step 2: The third data agent network element sends a data response message to the first data agent network element. Correspondingly, the first data agent network element receives the data response message from the third data agent network element.

Optionally, the data response message may include one or more of data included in the data request message.

Optionally, the first information may include the first data, for example, the network data, the user data, the internet of things data, and the artificial intelligence model data.

In this way, the first data agent network element can obtain the first data from a data source (the third data agent network element).

Optionally, step 2 may include: When the first data agent network element has the permission to access the first data of the third data agent network element, the third data agent network element sends the data response message to the first data agent network element; or when the first data agent network element has no permission to access the first data of the third data agent network element, the third data agent network element rejects this request. This can implement an E2E trusted service requirement on data.

Optionally, whether the first data agent network element has the permission to access the first data of the third data agent network element may be obtained by the third data agent network element from the trust anchor.

For example, the third data agent network element sends a verification request message to the trust anchor, and receives a verification response message from the trust anchor.

For example, the verification request message may be for requesting to verify whether the first data agent network element has the permission to access the first data of the third data agent network element.

Optionally, the verification request message may include the security information corresponding to the first data agent network element.

For example, the verification response message may indicate that the first data agent network element has or does not have the permission to access the first data of the third data agent network element.

Optionally, after receiving the verification request message, the trust anchor may check a data access policy and verify the security information, to obtain that the first data agent network element has or does not have the permission to access the first data of the third data agent network element.

For example, based on the data type of the first data, the trust anchor may check the data access policy and verify the security information.

For example, the data access policy may include: The first data agent network element has the permission to access the network data of the third data agent network element, and the first data agent network element has no permission to access the user data of the third data agent network element. If the first data is the user data, the verification response message may indicate that the first data agent network element has no permission to access the user data of the third data agent network element. If the first data includes the user data and the network data, the verification response message may indicate that the first data agent network element has no permission to access the user data of the third data agent network element, and the first data agent network element has the permission to access the network data of the third data agent network element.

In some embodiments, S804 may include: The first data agent network element processes second information based on the operation indicated by the operation configuration information, to obtain the first information.

Optionally, the second information may be received by the first data agent network element.

For example, the second information may be received by the first data agent network element from another data agent network element.

Optionally, the second information may be obtained based on the first data.

For example, the second information may be obtained through processing (for example, data acquisition, data pre-processing, data protection, data storage, and/or data analytics) performed by the another data agent network element on the first data.

For example, the operation configuration information may include but is not limited to one or more of the following: the data acquisition, the data pre-processing, the data protection, the data storage, and the data analytics.

For example, the second information is obtained through the data pre-processing performed by the another data agent network element on the first data, the operation configuration information includes the data analytics and the data protection, and the first data agent network element forms an operation chain (performs data analytics and then performs security protection) based on the operation configuration information, and obtains the first information by analyzing and performing security protection on the second information.

In some embodiments, S804 may include: The first data agent network element processes the first data and application data based on the operation indicated by the operation configuration information, to obtain the first information.

Optionally, the application data may be obtained by the first data agent network element from an application network element.

Optionally, a data agent network element may be deployed in the application network element.

For example, the application data may include but is not limited to: a user historical behavior record that is acquired by an application program in a compliant manner (for example, a user has been authorized).

For example, the first data agent network element performs collaborative processing on the internet of things data and the application data, so that abnormal behavior of the internet of things terminal device can be quickly and accurately determined.

S805a: When the operation configuration information indicates that the first data agent network element communicates with a second data agent network element, the first data agent network element sends the first information to the second data agent network element. Correspondingly, the second data agent network element receives the first information from the first data agent network element.

Optionally, the operation configuration information may indicate the first data agent network element to transmit the first information to the second data agent network element.

For example, the operation configuration information may include: interaction with the second data agent network element.

In this way, the first data agent network element may send the first information to the second data agent network element, and the second data agent network element may process or forward the first data based on the operation configuration information corresponding to the second data agent network element.

In a possible design method, the method provided in this embodiment of this application may further include the following step: S810: The trust anchor sends a second verification response message to the first data agent network element. Correspondingly, the first data agent network element receives the second verification response message from the trust anchor.

Optionally, the second verification response message may indicate that the second data agent network element has the permission to access the first data of the first data agent network element, or indicate that the second data agent network element has no permission to access the first data of the first data agent network element.

It needs to be noted that an execution sequence for S810 is not limited in this embodiment of this application. For example, S810 may be performed before S805a.

For example, when obtaining that the second data agent network element has the permission to access the first data of the first data agent network element, the first data agent network element sends the first information to the second data agent network element; or when obtaining that the second data agent network element has no permission to access the first data of the first data agent network element, the first data agent network element does not send the first information to the second data agent network element. This can implement an E2E trusted service requirement on data.

In this way, when the first data includes the user data, E2E compliance detection on the user data can be implemented.

In a possible design method, the method provided in this embodiment of this application may further include the following step: S811: The first data agent network element sends a second verification request message to the trust anchor. Correspondingly, the trust anchor receives the second verification request message from the first data agent network element.

Optionally, the second verification request message may be for requesting to verify whether the second data agent network element has the permission to access the first data of the first data agent network element.

Optionally, the second verification request message may include security information corresponding to the second data agent network element.

For example, the security information corresponding to the second data agent network element may be obtained by the first data agent network element from the second data agent network element.

For example, the security information may include but is not limited to a private key signature.

Optionally, after receiving the second verification request message, the trust anchor may check a data access policy and verify the security information, to obtain that the second data agent network element has or does not have the permission to access the first data of the first data agent network element. A specific implementation is similar to the foregoing implementation in which after receiving the verification request message, the trust anchor may check a data access policy and verify the security information, to obtain that the first data agent network element has or does not have the permission to access the first data of the third data agent network element. Details are not described herein again.

S805b: When the operation configuration information indicates that the first data agent network element communicates with the service request network element, the first data agent network element sends the first information to the service request network element. Correspondingly, the service request network element receives the first information from the data agent network element.

For example, the first information may be obtained based on the first data.

Optionally, the first data agent network element may be a data agent network element that directly communicates with the service request network element.

Optionally, the operation configuration information may indicate the first data agent network element to transmit the first information to the service request network element.

For example, the operation configuration information may include: the interaction with the service request network element.

In this way, the service request network element obtains the first information, where the first information may be original data, intermediate data, an analytics result, or the like.

In some embodiments, the method provided in this embodiment of this application may further include the following step: S812: The first data agent network element sends processing behavior information to the trust anchor. Correspondingly, the trust anchor receives the processing behavior information from the first data agent network element.

Optionally, the processing behavior information may indicate processing behavior executed by the first data agent network element on the first data.

For example, if the first data is the user data, the processing behavior information may indicate processing behavior executed by the first data agent network element on the first data, for example, acquisition, pre-processing, storage, data analytics, data protection, anonymization, and sending.

Optionally, the trust anchor may record the processing behavior on a distributed ledger.

In this way, any data agent network element may send processing behavior information to the trust anchor when processing the user data in a processing process (for example, S804 to S805b). This can meet a GDPR/PIPL compliance requirement.

In a possible design method, the method provided in this embodiment of this application may further include: The service request network element processes the first information, to obtain an application service or a service service.

For example, the first information may not be a final result wanted by the service request network element, for example, may be the intermediate data. The service request network element processes the first information, to obtain the final result.

In some embodiments, that the service request network element processes the first information, to obtain an application service or a service service may include: The service request network element obtains abnormal behavior information of the internet of things terminal device by using the first information.

For example, in the abnormal behavior detection scenario of the IoT terminal device, abnormal behavior of the internet of things terminal device may be obtained, for example, hijacking the IoT terminal device or an air interface signaling distributed denial of service (distributed denial of service, DDoS) attack.

In some embodiments, that the service request network element processes the first information, to obtain an application service or a service service may include: The service request network element predicts quality of service by using the first information and artificial intelligence model parameter configuration information.

Optionally, the artificial intelligence model parameter configuration information may be used to predict the quality of service.

In this way, the service request network element performs inference by using the artificial intelligence model parameter configuration information and the first information (which is the intermediate data), to obtain a quality of service prediction result.

Optionally, the service request network element locally stores the artificial intelligence model parameter configuration information.

Alternatively, optionally, if the service request network element does not locally store the artificial intelligence model parameter configuration information, the service request network element may obtain the artificial intelligence model parameter configuration information via the first data agent network element, and request the artificial intelligence model parameter configuration information from the first data agent network element.

Optionally, the service request network element may perform hashing on a digest of the artificial intelligence model, and perform comparison with a hash value stored in the distributed ledger, to verify model consistency.

Based on the method shown in FIG. 8, the data orchestration network element receives the first service request message, determines, from the one or more data agent network elements based on the requirement information and the one or more pieces of data service capability information, the data agent network elements participating in a current data service, and obtains the operation configuration information corresponding to each data agent network element participating in the current data service. The operation configuration information indicates the operation performed by the data agent network element on the first data, and the requirement information is the service requirement that is on the first data and that is determined based on the service requested by using the first service request message. The data orchestration network element sends the operation configuration information to the corresponding data agent network element, and the data agent network element performs the operation indicated by the operation configuration information. In this way, the data service can be implemented.

For example, FIG. 9 is a schematic flowchart of a communication method according to an embodiment of this application. In FIG. 9, the method shown in FIG. 8 is described by using an example in which an NS network element receives a service request message and translates the service request message into requirement information, and a data orchestration network element obtains the requirement information from the NS network element.

As shown in FIG. 9, the communication method includes the following steps.

S901: A service request network element sends a first service request message to the network service network element. Correspondingly, the network service network element receives the first service request message.

Optionally, the first service request message may be for requesting an application service or a service service. For a specific implementation of the first service request message, refer to corresponding descriptions in S801. Details are not described herein again.

For example, an application that is of an operator and that is used for network planning and optimization (which may be briefly referred to as a network planning and optimization application) sends a first service request message to the data orchestration network element, where the first service request message is for requesting to train a federated learning model, and the federated learning model is used to predict quality of service.

For example, the network planning and optimization application sends the first service request message to the data orchestration network element, where the first service request message is for requesting to predict quality of service of an area A. For a specific implementation, refer to corresponding descriptions in S801. Details are not described herein again.

S902: The network service network element sends the requirement information to the data orchestration network element. Correspondingly, the data orchestration network element receives the requirement information from the network service network element.

For example, the requirement information may be a service requirement that is on first data and that is determined based on a service requested by using the first service request message.

For example, the requirement information may be a service requirement that is on first data and that is determined by the network service network element based on a service requested by using the first service request message.

Optionally, the network service network element may perform requirement translation on the service requested by using the first service request message, where the translation (or mapping) is a service requirement on functions of a data agent network element.

For example, assuming that the first service request message is for requesting to train an AI model, and the network service network element performs requirement translation, obtained requirement information may include: an area A, data acquisition, data pre-processing, data analytics, and interaction with the service request network element.

It needs to be noted that, for a specific implementation of the requirement information, refer to corresponding descriptions in S902. Details are not described herein again.

Optionally, the network service network element determines the requirement information, which is applicable to but is not limited to be applicable to the following scenarios: a scenario in which the training of the federated learning model is requested (for example, Phase 1 in S802) and a scenario in which the prediction of the quality of service of the area A is requested (for example, Phase 2 in S802).

S903: The data orchestration network element determines, based on the requirement information and one or more pieces of data service capability information, at least one data agent network element and operation configuration information corresponding to each of the at least one data agent network element.

For a specific implementation of the requirement information, the data service capability information, the at least one data agent network element, and the operation configuration information, refer to corresponding descriptions in S801. Details are not described herein again.

For example, the requirement information corresponds to at least one of the one or more pieces of data service capability information.

It needs to be noted that, for a specific implementation of S903, refer to corresponding descriptions in S802. Details are not described herein again.

In some embodiments, the method provided in this embodiment of this application may further include: The data orchestration network element determines first communication information. For a specific implementation, refer to corresponding descriptions in S802. Details are not described herein again.

S904: The data orchestration network element sends the operation configuration information to a first data agent network element. Correspondingly, the first data agent network element receives the operation configuration information.

It needs to be noted that, for a specific implementation of S904, refer to corresponding descriptions in S803. Details are not described herein again.

Optionally, the method provided in this embodiment of this application may further include the following step: S907: The network service network element sends artificial intelligence training model parameter configuration information to the first data agent network element. Correspondingly, the first data agent network element receives the artificial intelligence training model parameter configuration information from the network service network element.

For example, the artificial intelligence training model parameter configuration information may be used by the data agent network element to obtain, through training based on an artificial intelligence training model, the AI model requested by the service request network element, for example, an AI model that may be used to predict quality of service.

S905: The first data agent network element processes the first data based on an operation indicated by the operation configuration information, to obtain first information.

It needs to be noted that, for a specific implementation of S905, refer to corresponding descriptions in S804. Details are not described herein again.

S906a: When the operation configuration information indicates that the first data agent network element communicates with a second data agent network element, the first data agent network element sends the first information to the second data agent network element. Correspondingly, the second data agent network element receives the first information from the first data agent network element.

It needs to be noted that, for a specific implementation of S906a, refer to corresponding descriptions in S805a. Details are not described herein again.

S906b: When the operation configuration information indicates that the first data agent network element communicates with the service request network element, the first data agent network element sends the first information to the service request network element. Correspondingly, the service request network element receives the first information from the data agent network element.

It needs to be noted that, for a specific implementation of S906b, refer to corresponding descriptions in S805b. Details are not described herein again.

In some embodiments, the method provided in this embodiment of this application may further include S908 to S914 shown in FIG. 9. A specific implementation of S908 to S914 is similar to that of S806 to S812. For details, refer to S806 to S812. Details are not described herein again.

Based on the method shown in FIG. 9, the network service network element receives the first service request message, and sends the requirement information to the data orchestration network element, and the data orchestration network element determines, from one or more data agent network elements based on the requirement information and the one or more pieces of data service capability information, data agent network elements participating in a current data service, and obtains operation configuration information corresponding to each data agent network element participating in the current data service. The operation configuration information indicates an operation performed by the data agent network element on the first data, and the requirement information is the service requirement that is on the first data and that is determined based on the service requested by using the first service request message. The data orchestration network element sends the operation configuration information to the corresponding data agent network element, and the data agent network element performs the operation indicated by the operation configuration information. In this way, the data service can be implemented.

In this application, unless otherwise specified, for same or similar parts in embodiments, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application.

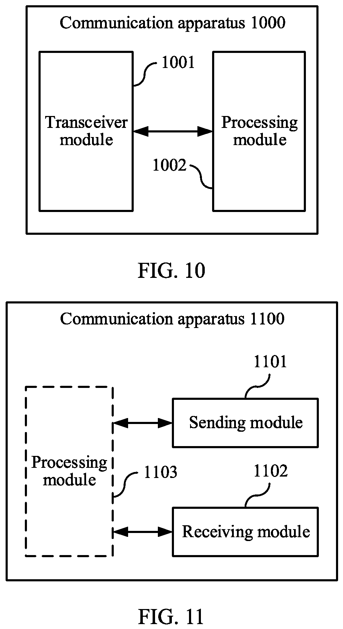

The communication methods provided in embodiments of this application are described above in detail with reference to FIG. 1 to FIG. 9. Communication apparatuses provided in embodiments of this application are described below in detail with reference to FIG. 10 and FIG. 11.

For example, FIG. 10 is a diagram of a structure of another communication apparatus according to an embodiment of this application. The communication apparatus may be used in the communication system shown in FIG. 1. For ease of description, FIG. 10 shows only main components of the communication apparatus. As shown in FIG. 10, the communication apparatus 1000 includes: a transceiver module 1001 and a processing module 1002.

In a possible design solution, the communication apparatus 1000 shown in FIG. 10 may be used in the system shown in FIG. 1, and performs a function of a data orchestration network element in the communication methods in FIG. 8 and FIG. 9.

The transceiver module 1001 is configured to receive a first service request message. The processing module 1002 is configured to determine, based on requirement information and one or more pieces of data service capability information, at least one data agent network element and operation configuration information corresponding to each of the at least one data agent network element. The transceiver module 1001 is further configured to send the operation configuration information. The requirement information is a service requirement that is on first data and that is determined based on a service requested by using the first service request message, the one or more pieces of data service capability information are in one-to-one correspondence with one or more data agent network elements, the at least one data agent network element is at least one of the one or more data agent network elements, the requirement information corresponds to at least one of the one or more pieces of data service capability information, and the operation configuration information of any one of the at least one data agent network element indicates an operation performed by the any one data agent network element on the first data.

It needs to be noted that all related content of the steps in the foregoing method embodiments may be cited in function descriptions of corresponding functional modules. Details are not described herein again.

It needs to be noted that the transceiver module 1001 may include: a receiving module and a sending module (not shown in FIG. 10). This is not specifically limited.

Optionally, the communication apparatus 1000 may further include a storage module (not shown in FIG. 10). The storage module stores a program or instructions. When the processing module 1002 executes the program or the instructions, the communication apparatus 1000 may perform the function of the data orchestration network element in the communication method shown in FIG. 8 or FIG. 9.

It needs to be noted that the communication apparatus 1000 may be the data orchestration network element, or may be a chip (system) or another component or assembly that may be disposed in the data orchestration network element. This is not limited in this application.

In addition, for technical effects of the communication apparatus 1000, refer to technical effects of the communication methods shown in FIG. 8 and FIG. 9. Details are not described herein again.

In a possible design solution, the communication apparatus 1000 shown in FIG. 10 may be used in the system shown in FIG. 1, and performs a function of a first data agent network element in the communication methods in FIG. 8 and FIG. 9.

The transceiver module 1001 is configured to receive operation configuration information. The processing module 1002 is configured to process first data based on an operation indicated by the operation configuration information, to obtain first information. The transceiver module 1001 is further configured to: when the operation configuration information indicates that the communication apparatus communicates with a second data agent network element, send the first information to the second data agent network element. Alternatively, the transceiver module 1001 is further configured to: when the operation configuration information indicates that the communication apparatus communicates with a service request network element, send the first information to the service request network element. The operation configuration information indicates the operation performed by the communication apparatus on the first data.

It needs to be noted that all related content of the steps in the foregoing method embodiments may be cited in function descriptions of corresponding functional modules. Details are not described herein again.

It needs to be noted that the transceiver module 1001 may include: a receiving module and a sending module (not shown in FIG. 10). This is not specifically limited.

Optionally, the communication apparatus 1000 may further include a storage module (not shown in FIG. 10). The storage module stores a program or instructions. When the processing module 1002 executes the program or the instructions, the communication apparatus 1000 may perform the function of the first data agent network element in the communication method shown in FIG. 8 or FIG. 9.

It needs to be noted that the communication apparatus 1000 may be the first data agent network element, or may be a chip (system) or another component or assembly that may be disposed in the first data agent network element. This is not limited in this application.

In addition, for technical effects of the communication apparatus 1000, refer to technical effects of the communication methods shown in FIG. 8 and FIG. 9. Details are not described herein again.

For example, FIG. 11 is a diagram of a structure of still another communication apparatus according to an embodiment of this application. The communication apparatus may be used in the communication system shown in FIG. 1. For ease of description, FIG. 11 shows only main components of the communication apparatus. As shown in FIG. 11, the communication apparatus 1100 includes: a sending module 1101 and a receiving module 1102.

The sending module 1101 is configured to send a first service request message to a data orchestration network element. The receiving module 1102 is configured to receive first information from a data agent network element. The first information is obtained based on first data.

It needs to be noted that all related content of the steps in the foregoing method embodiments may be cited in function descriptions of corresponding functional modules. Details are not described herein again.

It needs to be noted that the receiving module 1102 and the sending module 1101 may be separately disposed, or may be integrated into one module, namely, a transceiver module (not shown in FIG. 11). A specific implementation of the receiving module 1102 and the sending module 1101 is not specifically limited in this application.

Optionally, the communication apparatus 1100 may further include: a processing module 1103 and a storage module (not shown in FIG. 11). The storage module stores a program or instructions. When the processing module 1103 executes the program or the instructions, the communication apparatus 1100 may perform the function of the service request network element in the communication method shown in FIG. 8 or FIG. 9.

It needs to be noted that the communication apparatus 1100 may be the service request network element, or may be a chip (system) or another component or assembly that may be disposed in the service request network element. This is not limited in this application.

In addition, for technical effects of the communication apparatus 1100, refer to technical effects of the communication methods shown in FIG. 8 and FIG. 9. Details are not described herein again.

An embodiment of this application provides a communication system. The communication system includes a data orchestration network element and a first data agent network element, and may further include a service request network element. The data orchestration network element is configured to perform actions of the data orchestration network element in the foregoing method embodiments, the first data agent network element is configured to perform actions of the first data agent network element in the foregoing method embodiments, and the service request network element is configured to perform actions of the service request network element in the foregoing method embodiments. For specific execution methods and processes, refer to the foregoing method embodiments. Details are not described herein again.

An embodiment of this application provides a chip system. The chip system includes a logic circuit and an input/output port. The logic circuit may be configured to implement a processing function in the communication methods provided in embodiments of this application, and the input/output port may be configured to implement receiving and sending functions in the communication methods provided in embodiments of this application.

For example, the input port may be configured to implement the receiving function in the communication method provided in embodiments of this application, and the output port may be configured to implement the sending function in the communication method provided in embodiments of this application.

In a possible design, the chip system further includes a memory. The memory is configured to store program instructions and data for implementing functions in the communication methods provided in embodiments of this application.

The chip system may include a chip, or may include the chip and another discrete device.

An embodiment of this application provides a computer-readable storage medium. The computer-readable storage medium stores a computer program or instructions. When the computer program or the instructions are run on a computer, the communication method provided in embodiments of this application is performed.

An embodiment of this application provides a computer program product. The computer program product includes a computer program or instructions. When the computer program or the instructions are run on a computer, the communication method provided in embodiments of this application is performed.

It should be understood that, the processor in embodiments of this application may be a central processing unit (central processing unit, CPU). The processor may be further another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of random access memories (random access memories, RAMs) are available, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, circuit), firmware, or any combination thereof. When software is used to implement the embodiments, the foregoing embodiments may be implemented completely or partially in a form of a computer program product. The computer program product includes one or more computer instructions or computer programs. When the computer instructions or the computer programs are loaded and executed on the computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium that can be accessed by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" refers to one or more, and "a plurality of" refers to two or more. "At least one of the following items (pieces)" or a similar expression thereof refers to any combination of these items, including any combination of singular items (pieces) or plural items (pieces). For example, at least one item (piece) of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. Some or all of the units may be selected based on an actual requirement to achieve the objective of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a data orchestration network element, a first service request message;
determining, by the data orchestration network element based on requirement information and one or more pieces of data service capability information, at least one data agent network element and operation configuration information corresponding to each of the at least one data agent network element, wherein the requirement information is a service requirement that is on first data and that is determined based on a service requested by using the first service request message, the one or more pieces of data service capability information are in one-to-one correspondence with one or more data agent network elements, the at least one data agent network element is at least one of the one or more data agent network elements, the requirement information corresponds to at least one of the one or more pieces of data service capability information, and the operation configuration information of any one of the at least one data agent network element indicates an operation performed by the any one data agent network element on the first data; and
sending, by the data orchestration network element, the operation configuration information.

2. The communication method according to claim 1, wherein the first service request message is for requesting an application service or a service service.

3. The communication method according to claim 1 or 2, wherein the first service request message is from a service request network element, and the method further comprises:
receiving, by the data orchestration network element, a first verification response message from a trust anchor, wherein the first verification response message indicates that the service request network element has permission to access the first data.

4. The communication method according to claim 3, wherein the method further comprises:
sending, by the data orchestration network element, a first verification request message to the trust anchor, wherein the first verification request message is for requesting to verify whether the service request network element has the permission to access the first data.

5. The communication method according to any one of claims 1 to 4, wherein the first service request message is from the service request network element, and the method further comprises:
sending, by the data orchestration network element, first communication information, wherein the first communication information indicates information about a data agent network element that is in the at least one data agent network element and that directly communicates with the service request network element.

6. The communication method according to any one of claims 1 to 5, wherein the method further comprises:
receiving, by the data orchestration network element, the data service capability information corresponding to the one or more data agent network elements.

7. The communication method according to any one of claims 1 to 6, wherein data service capability information of any one of the one or more data agent network elements comprises one or more of the following: an identifier of the any one data agent network element, location information of the any one data agent network element, a data acquisition capability, a data pre-processing capability, a data storage capability, a data reporting capability, a data analytics capability, a capability of interacting with a service request network element, a data protection capability, and a data compression capability.

8. The communication method according to any one of claims 1 to 7, wherein the operation indicated by the operation configuration information comprises one or more of the following: data acquisition, data pre-processing, data protection, data storage, data analytics, and the interaction with the service request network element.

9. The communication method according to any one of claims 1 to 8, wherein the requirement information comprises one or more of the following service requirements: a geographical location, the data acquisition, the data pre-processing, the data storage, data reporting, the data analytics, the interaction with the service request network element, the data protection, and data compression.

10. The communication method according to any one of claims 1 to 9, wherein the requirement information corresponds to a data service task identifier.

11. The communication method according to any one of claims 1 to 10, wherein the method further comprises:
sending, by the data orchestration network element, updated information about a data security and privacy protection technology repository and/or updated information about an analytics tool repository to one or more of the at least one data agent network element.

12. The communication method according to any one of claims 1 to 11, wherein the data orchestration network element is deployed in a network service network element.

13. The communication method according to any one of claims 1 to 12, wherein the first data comprises: data acquired from a mobile communication network or synthesized data.

14. A communication method, comprising:
receiving, by a first data agent network element, operation configuration information, wherein the operation configuration information indicates an operation performed by the first data agent network element on first data;
processing, by the first data agent network element, the first data based on the operation indicated by the operation configuration information, to obtain first information; and
when the operation configuration information indicates that the first data agent network element communicates with a second data agent network element, sending, by the first data agent network element, the first information to the second data agent network element; or
when the operation configuration information indicates that the first data agent network element communicates with a service request network element, sending, by the first data agent network element, the first information to the service request network element.

15. The communication method according to claim 14, wherein the operation indicated by the operation configuration information comprises one or more of the following: data acquisition, data pre-processing, data protection, data storage, data analytics, and interaction with the service request network element.

16. The communication method according to claim 14 or 15, wherein the processing, by the first data agent network element, the first data based on the operation indicated by the operation configuration information, to obtain first information comprises:
sending, by the first data agent network element, a data request message to a third data agent network element based on the operation configuration information, wherein the data request message is for requesting one or more of the following data: network data, user data, internet of things data, and artificial intelligence model data; and
receiving, by the first data agent network element, a data response message from the third data agent network element, wherein the data response message comprises the one or more of the data comprised in the data request message.

17. The communication method according to claim 16, wherein the data request message further comprises security information, and the security information is used to verify whether the first data agent network element has permission to access the first data.

18. The communication method according to claim 14 or 15, wherein the processing, by the first data agent network element, the first data based on the operation indicated by the operation configuration information, to obtain first information comprises:
processing, by the first data agent network element, second information based on the operation indicated by the operation configuration information, to obtain the first information, wherein the second information is received by the first data agent network element, and the second information is obtained based on the first data.

19. The communication method according to any one of claims 14 to 18, wherein the method further comprises:
receiving, by the first data agent network element, a second verification response message from a trust anchor, wherein the second verification response message indicates that the second data agent network element has permission to access the first data of the first data agent network element.

20. The communication method according to any one of claims 14 to 19, wherein the method further comprises:
sending, by the first data agent network element, a second verification request message to the trust anchor, wherein the second verification request message is for requesting to verify whether the second data agent network element has the permission to access the first data of the first data agent network element.

21. The communication method according to any one of claims 14 to 20, wherein the method further comprises:
sending, by the first data agent network element, data service capability information to a data orchestration network element.

22. The communication method according to claim 21, wherein the data service capability information comprises one or more of the following: an identifier of the first data agent network element, location information of the first data agent network element, a data acquisition capability, a data pre-processing capability, a data storage capability, a data reporting capability, a data analytics capability, a capability of interacting with the service request network element, a data protection capability, and a data compression capability.

23. The communication method according to any one of claims 14 to 22, wherein the method further comprises:
receiving, by the first data agent network element, updated information about a data security and privacy protection technology repository and/or updated information about an analytics tool repository from the data orchestration network element.

24. The communication method according to any one of claims 14 to 23, wherein the first data comprises: data acquired from a mobile communication network or synthesized data.

25. A communication method, comprising:
sending, by a service request network element, a first service request message to a data orchestration network element; and
receiving, by the service request network element, first information from a data agent network element, wherein the first information is obtained based on first data.

26. The communication method according to claim 25, wherein the first service request message is for requesting an application service or a service service.

27. The communication method according to claim 25 or 26, wherein the method further comprises:
receiving, by the service request network element, first communication information, wherein the first communication information indicates information about a data agent network element that directly communicates with the service request network element.

28. The communication method according to any one of claims 25 to 27, wherein the method further comprises:
processing, by the service request network element, the first information, to obtain the application service or the service service.

29. The communication method according to claim 28, wherein the processing, by the service request network element, the first information, to obtain the application service or the service service comprises:
obtaining, by the service request network element, abnormal behavior information of an internet of things terminal device by using the first information.

30. The communication method according to claim 28, wherein the processing, by the service request network element, the first information, to obtain the application service or the service service comprises:
predicting, by the service request network element, quality of service by using the first information and artificial intelligence model parameter configuration information, wherein the artificial intelligence model parameter configuration information is used to predict the quality of service.

31. The communication method according to claim 30, wherein the method further comprises:
requesting, by the service request network element, the artificial intelligence model parameter configuration information from the data agent network element.

32. The communication method according to any one of claims 25 to 31, wherein the first data comprises: data acquired from a mobile communication network or synthesized data.

33. A communication apparatus, wherein the communication apparatus comprises a unit or a module configured to perform the method according to any one of claims 1 to 13.

34. A communication apparatus, wherein the communication apparatus comprises a unit or a module configured to perform the method according to any one of claims 14 to 24.

35. A communication apparatus, wherein the communication apparatus comprises a unit or a module configured to perform the method according to any one of claims 25 to 32.

36. A communication apparatus, wherein the communication apparatus comprises a processor, wherein the processor is configured to perform the communication method according to any one of claims 1 to 32.

37. A communication system, wherein the communication system comprises at least one of the following: the communication apparatus according to claim 33, the communication apparatus according to claim 34, or the communication apparatus according to claim 35.

38. A computer-readable storage medium, wherein the computer-readable storage medium stores a computer program or instructions, and when the computer program or the instructions are run on a computer, the communication method according to any one of claims 1 to 32 is performed.

39. A computer program product, wherein the computer program product comprises a computer program or instructions, and when the computer program or the instructions are run on a computer, the communication method according to any one of claims 1 to 32 is performed.
